# EUROPEAN PATENT APPLICATION

(11) **EP 1 625 788 A1**
(43) Date of publication of application: **15.02.2006**
(21) Application number: 04734094.8
(22) Date of filing: 20.05.2004
(51) Int. Cl.: A01K 23/00, A01K 31/04, A01K 1/01

(54) **AUTOMATIC CLEANING AND PACKAGING DEVICE FOR PET EXCREMENT AND COLLECTING MATERIAL FOR PET EXCREMENT**

(30) Priority: 20.05.2003 JP 2003180309
(71) Applicant: Hamada, Hiroyasu;, Ikuno-ku Osaka 5440031 (JP)
(72) Inventor: Hamada, Hiroyasu;, Ikuno-ku Osaka 5440031 (JP)
(74) Representative: Kaiser, Jürgen
(86) International application number: PCT/JP2004/006839
(87) International publication number: WO 2004/103069

(57) **Abstract**

The present invention provides a device to move pet excrement, such as dung or urine, on a pet toilet, to a packaging part, where the source of odors is completely packaged and sealed, so that the invention keeps the pet toilet clean, prevents odors from diffusing into a room, and sets an owner free from the unpleasant work of removing pet excrement. This device includes a collecting material to collect pet excrement, a set container to set therein the collecting material, a means for moving the collecting material, collected together with the pet excrement from the set container, to a packaging part, and a means for packaging the pet excrement and the collecting material, moved by the moving means, using a packaging material. Thus, the device packages pet excrement in a sealed packaging material, sets an owner from the worst work of handling the pet excrement, removes the source of ordors, and keeps the pet toilet clean.

## Description

### [Technical Field]

The present invention relates, in general, to pet toilets for collecting pet excrement and, more particularly, to a pet toilet to be used in a pet basket or cage for keeping small pet animals, such as dogs, cats and birds.

### [Background Art]

Generally, conventional pet toilets have been configured as follows. A conventional litter box for cats is a place that is provided with a set container containing therein litter having high polymers. Thus, when a cat excretes in the litter box, the excrement of the cat becomes hardened by the high polymers, so that an owner can scoop up clods of hardened excrement and discard the excrement as incombustible waste.

In the case of a dog raised outdoors, the dog may excrete any place in a yard without permission from an owner so that the owner must scoop up the excrement of the dog using a scoop (shovel) and bury the excrement in the ground.

In the case of a dog which is raised indoors and can be trained to excrete in a designated place, it is possible to train the dog to excrete in a marketed pet toilet or on a high polymer sheet which is a toilet material. In other words, the dog raised indoors may be encouraged to excrete on a high polymer sheet and the sheet, which absorbs the pet excrement, may be discarded as incombustible waste.

In the case of a cage, an excrement tray may be removed from the cage and washed, or paper, such as old newspaper, may be laid on the excrement tray and discarded after a pet has excreted on the paper.

The raising of a pet is accompanied by the generation of odors and the odor may be destroyed by a conventional deodorant or aromatic. However, the method of destroying odors using the deodorant or the aromatic is not a method that removes the source of the odors, thus failing to completely eliminate the odors.
Patent document 1: European Patent Publication EP721731
Patent document 2: European Patent Publication EP154540
Patent document 3: US Patent Publication US5048465
Patent document 4: US Patent Publication US5226388
Patent document 5: US Patent Publication US5107797
Patent document 6: US Patent Publication US4729342
Patent document 7: US Patent Publication US4886014
Patent document 8: US Patent Publication US4897183
Patent document 9: European Patent Publication EP2970015

As a result of research of prior art related to the present invention, it has been noted that research on the European patents and US patents, rather than Japanese patents, has been more effective to find documents close to the scope and spirit of the present invention.

An example of conventional techniques of automatically cleaning pet excrement is disclosed in European Patent Publication EP721731. This patent discloses a litter box specifically for cats, and includes a stool fork to separate excrement from litter and a cat litter tray.

In a place where the stool fork moves, an openable container to collect hardened excrement is provided and separates the excrement from litter and collects only the hardened excrement.

The excrement collecting container can be periodically removed from the device and can be emptied.

The stool fork starts its operation after sufficient time, required to appropriately harden the urine of a cat, has passed after urination. When the stool fork takes the excrement into the container, the cat litter tray is moved in a reverse direction by the stool fork, thus roughly making the litter uniform. If the amount of litter is reduced, the owner may fill up the empty portion.

The technique disclosed in the present invention is similar to that of a conventional device marketed under the trademark of Littermaid Mega. Furthermore, European Patent Publication EP154540 discloses a pet toilet specifically for small pets, such as cats, which is designed as an indoor toilet. This pet toilet includes a basin which is a bowl-shaped container, with a movable rake placed on the basin. The movable rake moves hardened excrement to the edge of the basin, and drops the hardened excrement to a rotary drum placed below the basin from the edge of the basin. This rotary drum functions as an excrement collecting container, which contains therein a deodorant substance for the pet excrement. The rotary drum may be separated from the device to be emptied and cleaned.

The above-mentioned conventional techniques are for collecting pet excrement in a container, but do not automatically discard the excrement, unlike the present invention. In other words, the conventional techniques temporarily collect the pet excrement in a container without sealing the container, thus undesirably causing odors to diffuse into the room from the container. That is, the conventional techniques cannot efficiently collect pet excrement without permitting the diffusion of odors into a room, and requires an owner to discard the excrement collecting container as waste or to periodically wash the container.

The excrement collecting set container is typically placed in a secluded area, such as a corner of a room or a corridor, which is not easily seen by a person. Thus, if an owner neglects the cleaning or washing of the excrement collecting set container, odors diffuse into the air of a room from the pet excrement, such as dung or urine, and cause the living environment to become unpleasant.

If a large amount of excrement is accumulated in a set container, cats are reluctant to excrete in the set container, but excrete on a sofa or bedsheets without permission, and occasionally excrete in a litter packaging bag containing fresh litter therein. According to the observation of the present inventor, when a pet toilet is contaminated with excrement, cats may put off relieving themselves and thus their health may be ill-affected. If an owner plans to clean the set container once a week, most cats are reluctant to excrete in the set container over the weekend. The present inventor viewed that a cat reluctant to excrete over the weekend used the set container just after cleaning the contaminated set container. Furthermore, when the present inventor neglected the cleaning of the set container for ten days or more, a cat excreted on a sofa and bedsheets without permission, thus offending the present inventor.

In the above description, the technical term "set container" means a container which contains litter specifically for cats.

### [Detailed Description of the Present Invention]

As described above, because the raising of a pet requires an owner to consume considerable time and labor and causes odors, raising a pet is difficult as follows.

In the case of a dog raised outdoors, the dog may excrete any place in a yard without permission. Thus, the worst part of outdoor dog raising is the handling of excrement.

However, a dog raised indoors may be trained to excrete in a designated place. Thus, it is possible to train an indoor dog to excrete in a marketed pet toilet or on a high polymer sheet which is a toilet material. However, it is necessary to remove an old high polymer sheet, which absorbs pet excrement, from the toilet and to install a fresh piece of sheet in the toilet, so that an owner must consume considerable time and labor to clean the toilet. Furthermore, odors diffuse from the excrement on the sheet into a room. Thus, the worst part of indoor dog raising is the handling of excrement.

In a pet toilet specifically for dogs, the set container means a base on which a high polymer sheet is placed. In the present invention, the term "set container" is specifically used in an effort to effectively secure the scope of rights claimed in this application. However, the term "set container" is also used to avoid contradiction of the scope and spirit of the invention as disclosed in the claims. Thus, the term "set container" means a container to collect pet excrement or an auxiliary facility to collect the pet excrement using a collecting material.

In the case of birds, particularly, when birds, such as macaws, are raised in a cage, an excrement tray may be installed in the cage. However, the birds in the cage are restricted. Furthermore, the excrement tray must be periodically removed from the cage to be cleaned and washed, thus being inconvenient to an owner.

Pets are pretty animals. However, the above-mentioned problems experienced in raising a pet may cause some uncaring owners to abandon their pets. If the pets are not familiar with the owners, the owners may lose the desire to raise pets due to inconvenient work of cleaning up the pet excrement, which requires the owners to consume time and labor.

While raising a pet, an owner encounters actual difficulties of the generation of odors which cause the living environment to become unpleasant. In an effort to improve the living environment, odors may be destroyed using a deodorant or aromatic which are necessities for raising a pet and can be easily gotten from a market.

In an effort to restrict the generation of odors from pet excrement, litter, specifically for cats, which has a deodorizing function and a sweet-smelling function has been proposed and used. The toilet for pet dogs is configured to encourage a dog to excrete on a high polymer sheet, so that, if an owner neglects the work of cleaning up the excrement, the air in a room is contaminated with odors diffusing from the excrement in the toilet placed in the room.

The excrement of birds does not emit severe odors, unlike the excrement of cats or dogs, but, when the bird's excrement is accumulated and dried on an excrement tray, the dry excrement may become dust and fly in the air due to the flapping of the wings. Thus, it is necessary for the toilet specifically for birds to provide a function of suppressing the excrement dust rather than a deodorizing function.

Accordingly, the present invention has been made keeping in mind the above problems occurring in the prior art and personally experienced by the inventor when raising pets, and an object of the present invention is to set an owner free from the inconvenient work of removing pet excrement or cleaning a set container, to overcome the problem caused by offensive odors diffusing from pet excrement and, furthermore, to prevent some uncaring owners from abandoning their pets, such as dogs and cats.

The main object of the present invention is to collect the pet excrement without permitting odors to diffuse from the excrement into a room.

In an effort to solve the above-mentioned objects, the present invention provides an automatic cleaning and packaging device for pet excrement, including a collecting material to collect pet excrement, a set container to set the collecting material therein, a means for moving the collecting material, collected together with the pet excrement from the set container, to a packaging part; and a means for packaging the pet excrement and the collecting material, moved by the moving means, using a packaging material. Thus, the device of the present invention can quickly package pet excrement in a sealed packaging material, so that the owner can simply and easily discard the packaged excrement into a garbage can. Therefore, the present invention releases the owner from the work of directly handling the pet excrement, which is the worst part of raising a pet. Because the present invention packages the pet excrement in the sealed packaging material, the pet excrement which may emit odors, is completely isolated, so that the source of odors is eliminated, and the pet toilet is kept clean.

When the device of the present invention is a litter box specifically for cats, the collecting material is a granule-shaped material having high polymers, so that the pet excrement becomes hardened by the high polymers of the collecting material and is fed to the packaging part to package the pet excrement. Thus, this litter box can achieve the results described above.

When the device of the present invention is a pet toilet specifically for dogs, the collecting material is an absorbent sheet-shaped material, so that, when the pet excretes on the sheet-shaped material, the sheet-shaped material is fed to the packaging part to package the pet excrement. Thus, this dog toilet can achieve the results described above.

The set container is preferably provided with a means for detecting the presence of a pet in the set container or on the collecting material, so that, when no pet is present either in the set container or on the collecting material, the detecting means operates the moving means to move the collecting material, collected together with the excrement, to the packaging part.

Thus, the present invention preferably prevents an accident in which a pet, which is present in the set container or on the collecting material, is forcibly moved to the packaging part and preferably prevents a malfunction of the packaging part while packaging pet excrement.

The set container is preferably provided with a means for detecting whether a pet is present in the set container or on the collecting material, a fence surrounding the set container to selectively prevent the pet from reaching the set container, an inlet opening defined in the fence to allow the pet to enter the set container, and an openable automatic door provided in the inlet opening, wherein, after appropriately predicting the time that no pet is present in the set container, the inlet opening is closed during the operation of moving the collecting material to the packaging part. Thus, this device ensures the safety of pets and prevents malfunction while packaging the pet excrement. However, if a pet is detected again by the detecting means, the packaging operation is preferably stopped.

When the collecting material includes a material having high polymers, the set container preferably includes: a means for setting estimated time, required by the high polymers which absorb the pet excrement to appropriately harden the pet excrement; a means for counting time; and a means for detecting whether a pet is present in the set container or on the collecting material, wherein, when the detecting means detects that a pet is present in the set container or on the collecting material, the time counting means starts counting time, and when the detecting means detects that no pet is present either in the set container or on the collecting member after the preset time, required by the high polymers which absorb the pet excrement to appropriately harden the pet excrement, has passed, the moving means for moving the collecting material, collected together with the pet excrement from the set container, to the packaging part is operated. Thus, this device prevents the packaging part from being contaminated with pet excrement and, furthermore, in the case of a litter box specifically for cats, it is possible to separate excrement from the litter, that is, the collecting material and, furthermore, to prevent a scooping unit from being contaminated with excrement.

In another aspect, the automatic cleaning and packaging device for pet excrement preferably includes: a collecting material to collect the pet excrement; and a set container to set therein the collecting material, the set container including: a means for detecting whether a pet is present in the set container or on the collecting material, and a means for spraying deodorant, wherein, when the detecting means detects that no pet is present either in the set container or on the collecting material after the pet has excreted on the collecting material in the set container, the spraying means is operated to spray the deodorant. Thus, this device does not allow odors to diffuse into a room.

In a further aspect, the automatic cleaning and packaging device for pet excrement preferably includes: a collecting material to collect the pet excrement; a set container to set therein the collecting material; and an odor suction means for drawing odorous air contaminated with odors generated from the pet excrement in the set container, wherein the odorous air drawn by the odor suction means is effectively filtered using a deodorizing means prior to being discharged into a room.

In the case of an automatic cleaning and packaging device specifically for cats, the device preferably includes: a collecting material to collect the pet excrement, the collecting material including a granule-shaped material specifically for cats and having high polymers; and a set container to set therein the collecting material, wherein, when the collecting material in the set container becomes old, the old collecting material is removed from the set container and is moved to a packaging part while an appropriate amount of fresh collecting material is supplied to and set in the set container.

If the collecting material is continuously used for an excessive lengthy period of time, the collecting material emits odors, ill-affects the owner's health and, furthermore, causes a pet to be reluctant to excrete on the odorous collecting material. Thus, it is necessary to periodically change all of the collecting material with fresh collecting material. The present invention can automatically and periodically execute changing of the collecting material.

In the case of an automatic cleaning and packaging device specifically for dogs, the device preferably includes: a sheet-shaped collecting material to collect the pet excrement; and a set container to set therein the collecting material, wherein, after an existing piece of sheet-shaped collecting material has been removed from the set container, a fresh piece of sheet-shaped collecting material is supplied to and set in the set container.

The sheet-shaped collecting material is adhered to the packaging material at regular intervals, so that, when a piece of sheet-shaped collecting material is fed to the packaging part to package the pet excrement, it is necessary to supply and set a fresh piece of sheet-shaped collecting material in the set container after removing the old sheet-shaped collecting material from the set container. In the above state, it is preferred to set the packaging stage and the setting stage in the same place.

At least part of the packaging material is preferably made of a transparent material, so that the owner can view the pet excrement from outside the packaging material and check the condition of the pet's health.

Some owners may view the pet excrement and check the condition of the pet's health.

To meet the requirements of such owners, part of the packaging material is preferably made of a transparent material to allow the owner to view the pet excrement from the outside of the packaging material. If an owner desires to more carefully check the condition of the pet's health, he/she preferably applies force to compress the excrement from outside the packaging material.

The present invention preferably provides a collecting material for pet excrement, which is specifically used for dogs and includes: an absorbent sheet-shaped material attached to a packaging material at regular intervals and shaped into a roll shape; and a sensor installed in a set container to set the collecting material therein, wherein the detecting means checks for a gap between pieces of the absorbent sheet-shaped material and creates a seal by stopping the gap between the pieces of absorbent sheet-shaped material, thus increasing the function and efficiency of the device.

The present invention also provides a collecting material for excrement of a pet raised in a basket, which is used as a packaging material to directly collect and package the excrement, has a thermally sealable surface, and is set in a roll-type shape, wherein the collecting material includes:
an ID tag, to or from which data indicating a winding amount of the roll-type collecting material can be stored or erased; a signal transmission/receiving unit to transceive a signal to or from the ID tag; and a means for detecting a fed amount of the set collecting material, based on the data indicating the winding amount of the roll-type collecting material stored in the ID tag, wherein data indicating an area of the collecting material which is not in direct contact with the pet excrement has been stored in a memory part; the data indicating the area is read from the memory part while the collecting material is fed to a packaging part; and, when the detecting means detects that a thermal sealing part has reached the area, movement of the thermal sealing part is stopped and the excrement is packaged at a place offset from the excrement collecting place.

Furthermore, because the device stores the original winding amount data in a memory so that the device can prevent packaging error and easily calculates the area which is not in direct contact with pet excrement.

When it is detected, based on the data indicating the winding amount stored in the ID tag, that the amount of remaining collecting material is reduced below a predetermined reference amount, the reduction in the remaining amount is made known through an alarm; and, when it is determined that the amount of the remaining collecting material cannot reach the area which is not in direct contact with the pet excrement, the remaining collecting material is not fed even if it is required to feed the collecting material. Thus, the problem of contaminating the pet basket with pet excrement can be overcome.

The present invention further provides a packaging material for pet excrement specifically for cats, which is used with an excrement collecting material being a granule-shaped material having high polymers, is used to package the excrement, has a thermally sealable surface, and is set in a roll-type shape, wherein the packaging material includes:
an ID tag provided on the packaging material, in or from which data indicating a winding amount of the roll-type packaging material can be stored or erased; a signal transmission/receiving unit to transceive a signal to or from the ID tag; and a means for detecting a fed amount of the set packaging material, based on the data indicating the winding amount of the roll-type packaging material stored in the ID tag, wherein data indicating a standard length of a consumed part of the packaging material and data indicating a fed amount of the packaging material required to be fed at the time of changing the granule-shaped collecting material having high polymers have been stored in a memory part; when it is detected, based on the data indicating the winding amount stored in the ID tag, that the amount of the remaining packaging material is reduced below a predetermined reference amount, the reduction in the remaining amount is made known through an alarm; and, when it is determined that the amount of the remaining packaging material cannot reach an area which is not in direct contact with the pet excrement, the remaining packaging material is not fed even if it is required to feed the packaging material. This is caused by the fact that it is necessary to prevent the set container and/or surroundings from being contaminated with the excrement and, furthermore, if the packaging material is not fed while the old collecting material is changed with fresh material, a cat cannot use the toilet.

If the packaging material lacks, it is necessary to quickly inform an owner of the deficiency of the packaging material and to reduce the consumption of the packaging material until the owner fills up the empty portion.

According to the present invention, the dung or urine in the pet toilet is moved to the packaging part which packages the pet excrement in a sealed packaging material, thus eliminating the source of odors. Therefore, the pet toilet can be always kept clean and does not emit odors to a room.

Because the device automatically packages the pet excrement, thus allowing the owner to be released from the work of directly handling the pet excrement, which is the worst part of raising a pet. Furthermore, the pet excrement can be viewed from the outside through a transparent packaging material, thus allowing the owner to check the condition of the pet's health before discarding the packaged excrement as incombustible waste, so that the device is convenient to the owner.

To remove odors diffusing from the excrement collecting set container, an air collecting means is provided on the upper part of the set container to collect odorous air. The odorous air collected by the air collecting means is filtered by a deodorizing means prior to being discharged into a room, thus preventing odors from diffusing into the room. Furthermore, the detecting means detects whether a pet is present in the set container and causes the deodorant to be sprayed after the pet has used the toilet, thus preventing ordors from diffusing into the room.

In the case of a pet toilet specifically for caged birds, the excrement of the birds does not emit severe odors. However, when the bird's excrement is accumulated and dried on an excrement tray, the dry excrement may become dust and fly in the air due to the flapping of the wings. The present invention efficiently mitigates the problems caused by the excrement dust.

Furthermore, if an owner is out of home for a lengthy period of time, the present invention can package all the pet excrement and change all of the contaminated collecting material in the set container with fresh collecting material. Thus, the pet toilet of the present invention, which has the set container and automatically supplies collecting material to the set container, can be kept clean.

### [Brief Description of Drawings]

FIG. 1 is a perspective view of a litter box specifically for cats;
FIG. 2 is a side view of the litter box;
FIGS. 3a through 3i are views illustrating the operation of an excrement scooping unit;
FIGS. 4a through 4f are views illustrating the operation of a collecting material supply unit;
FIG. 5 is a view illustrating a deodorant spraying unit;
FIG. 6 is a view illustrating a deodorizing unit;
FIG. 7 is a view illustrating the tilting operation of a set container;
FIGS. 8a and 8b are views illustrating the excrement packaging operation;
FIG. 9 is a perspective view illustrating the operation of the excrement scooping unit;
FIG. 10 is a view of a control panel for cat litter boxes;
FIG. 11 is a perspective view of a dog toilet;
FIGS. 12a through 12d are views illustrating the operation of the dog toilet;
FIGS. 13a and 13b are views illustrating a cutting unit to cut a roll-type collecting material for dog toilets;
FIG. 14 is a view of a control panel for dog toilets;
FIG. 15 is a view of a bird toilet;
FIG. 16 is a view illustrating a cutting unit to cut a roll-type collecting material for bird toilets;
FIG. 17 is a view of a control panel for bird toilets;
FIG. 18 is a perspective view illustrating a packaging material and a core;
FIG. 19 is a view illustrating a film-type transponder; and
FIG. 20 is a block diagram of a communication circuit.

### <Description of the Reference Numerals>

1 - collecting material
1a - roll-type collecting material
2 - set container
3 - toilet casing unit
3a - toilet roof part
3b - toilet sidewall
4 - support shaft
5 - hopper
6 - packaging material
6a - transparent packaging material
6b - opaque packaging material
6c - packaging chamber part
7 - packaging part
7a - heat roller
7b - sealing bar
7c - packaging part guide roller
8 - discharging part
9 - door
10 - lower receiving part
11 - collecting material receiving part
12 - roof door
12a - handle
13 - collecting material supply unit
14 - excrement scooping unit
15 - odor port
16 - duct
17 - deodorizing filter
18 - sirocco fan
19 - spraying nozzle
20 - valve
21 - electronic solenoid
22 - deodorant tank
23 - sensor
24 - lever
25 - pressure sensor
26 - exhaust duct
27 - fan motor
28 - tilting shaft
29 - actuating arm
30 - arm rotating shaft
31 - tilting link
32 - rack gear
33 - pinion gear
34 - worm
35 - set container motor
36 - cutter
37 - excrement
38 - light transmittance sensor
39 - control panel
40 - scooping frequency setting counter
41 - scooping start time setting counter
42 - litter changing frequency setting counter
43 - scooping frequency setting lamp
44 - scooping start time setting lamp
45 - litter changing frequency setting lamp
46 - setting key
47 - increment key
48 - decrement key
49 - position number changing key
50 - enter key
51 - cancel key
52 - residual reserve litter amount alarm lamp
53 - residual packaging material amount alarm lamp
54 - casing frame
55 - horizontal slide shaft
56 - traveling rail
57 - support plate
58 - support shaft
59 - thrust bearing
60 - drive shaft
61 - feed motor
62 - traveling roller
63 - shaft
64 - shaft rotating motor
65 - casing
66 - slope surface
67 - covering wall
68 - urination target
69 - feed roller
70 - pressure roller
71 - collecting material cutter guide
72 - roller cutter blade
73 - chute
74 - control panel for dog toilets
75 - packaging frequency setting counter
76 - packaging start time setting counter
77 - target cleaning frequency setting counter
78 - packaging frequency setting lamp
79 - packaging start time setting lamp
80 - target cleaning frequency setting lamp
81 - residual collecting sheet amount alarm lamp
82 - cage
83 - raising window
84 - support column
85 - hanger
86 - seal guide
87 - core
88 - transponder
89 - control circuit
90 - RW unit
91 - RF module
92 - control module
93 - antenna
94 - bearing
95 - semiconductor chip

### [Best Mode]

The present invention is embodied by the following four embodiments.

### First Embodiment

### (Cat Excrement)

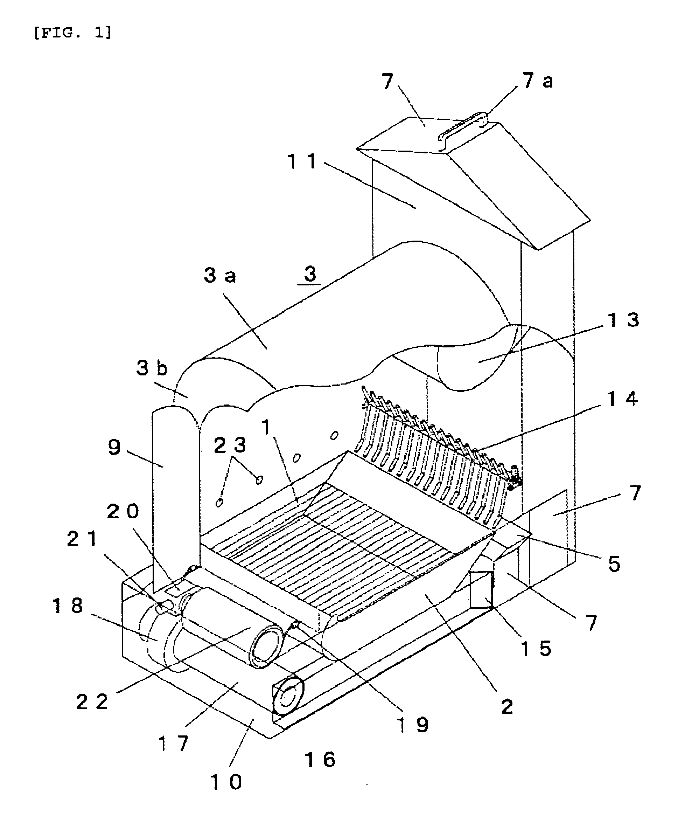

FIG. 1 is a perspective view illustrating an automatic cleaning and packaging device which is specifically for cat excrement.

The automatic cleaning and packaging device according to the first embodiment includes a set container 2 which receives therein litter 1 which is a collecting material specifically for cat excrement. As shown in the drawing, the set container 2 has parallel sidewalls, an inclined end wall perpendicular to the parallel sidewalls and inclined toward a bottom wall of the set container, and an R-shaped end wall provided opposite the inclined end wall. The set container 2 can evenly contain therein the litter 1 to collect cat excrement.

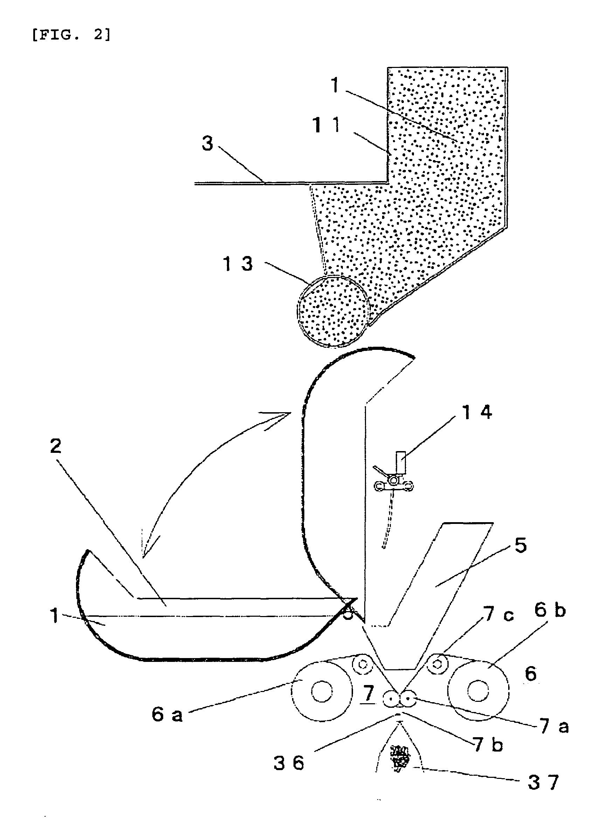

The set container 2 is rotatable, as shown in FIG. 2, around a support shaft 4, which is placed below the inclined end wall inclinedly extending toward the set container bottom wall, at an angle of about 90 degrees, so that the container 2 can discharge the litter 1 with the pet excrement from the end of the inclined end wall of the set container. The rotating action of the set container 2 may be executed by an actuator (not shown), such as a motor actuator or a cylinder actuator, which will be described later herein. A hopper 5 is placed around the end of the inclined wall of the set container 2, and a packaging material 6 is placed below the hopper 5, so that the discharged pet excrement with the litter 1 is packaged at a packaging part 7. Returning to FIG. 1, the excrement packaged at the packaging part 7 is discharged through a discharge port 8.

The packaging part 7 includes a heat roller 7a to thermally seal the packaging material 6 in a width direction, and sealing bars 7b, with a cutter 36 provided in the sealing bars 7b. The packaging material 6 includes a transparent packaging material 6a made of a transparent material and an opaque packaging material 6b made of an opaque material. Thus, the excrement 37 can be viewed from the outside through the transparent packaging material 6a, thus allowing an owner to check the condition of the cat's health before discarding the packaged excrement.

The set container 2 includes a toilet casing unit 3 which has a toilet roof part 3a, a toilet sidewall 3b, a door 9, a lower receiving part 10, a reserve litter receiving part 11 to receive therein reserve litter which replaces old litter existing in the set container, a roof door 12 to put the litter into the container 2, and a handle 12a. The litter receiving part 11 is provided with a sensor (not shown) to check the litter 1 in the litter receiving part 11.

A litter supply unit 13 is placed at a position below both the litter receiving part 11 and the toilet roof part 3a. A comb-shaped excrement scooping unit 14 is placed below the litter supply unit 13. This comb-shaped excrement scooping unit 14 is constructed such that the end of the comb part is inserted into the set container 2 from the inclined end wall of the container, which is inclined toward the set container bottom wall and moves along the bottom wall of the container. When the rotating shaft of the excrement scooping unit 14 becomes aligned with the central axis of the R-shaped end wall of the set container during the movement thereof, the end of the comb part moves along the R-shaped end wall. Thus, the excrement scooping unit 14 scoops up the excrement hardened by the litter 1 and feeds the excrement to the packaging part.

The lower receiving part 10 includes an odor port 15, a duct 16, a deodorizing filter 17, and a sirocco fan 1, and removes odors from air using the deodorizing filter 17 prior to discharging the air into a room having the toilet.

At a position close to the door 9, a valve 20, an electronic solenoid 21, and a deodorant tank 22 are placed in a pipe having a spraying nozzle 19.

At a position above the set container 2, a cat sensor 23 to detect the presence of a cat in the set container 2 is provided.

If the cat sensor determines that a cat is not placed in the set container, the cat sensor may output a signal to close the door 9, operate the excrement scooping unit 14, discharge the litter 1 from the set container, or operate the litter supply unit 13. In the above state, the door 9 is operated using the rotating force of a motor (not shown). However, if the cat sensor determines that a cat is present in the set container, the cat sensor outputs a signal to start the operation of a timer and operate the excrement scooping unit 14 after the time, required by the litter 1 to appropriately harden, has passed, thus efficiently scooping up only the excrement without failure.

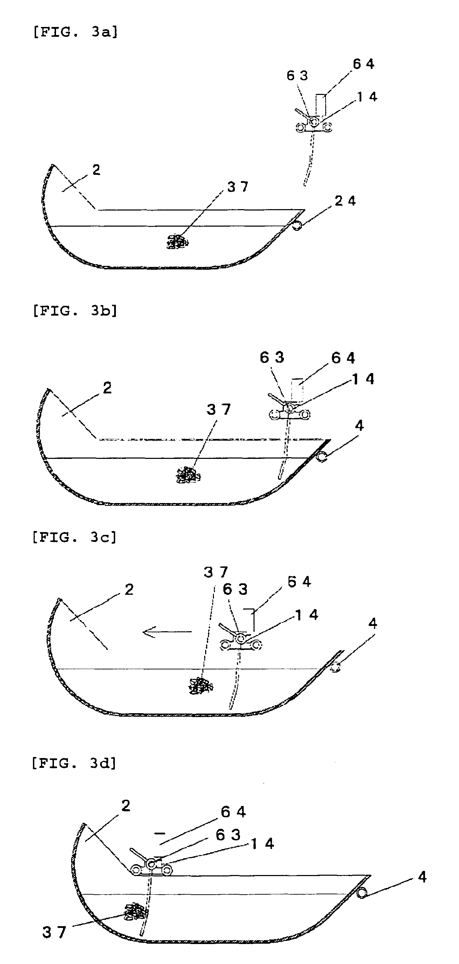

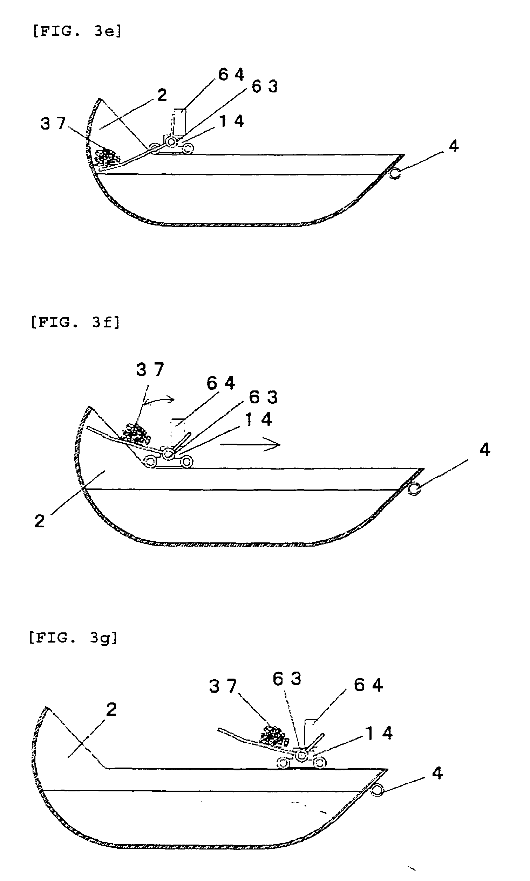

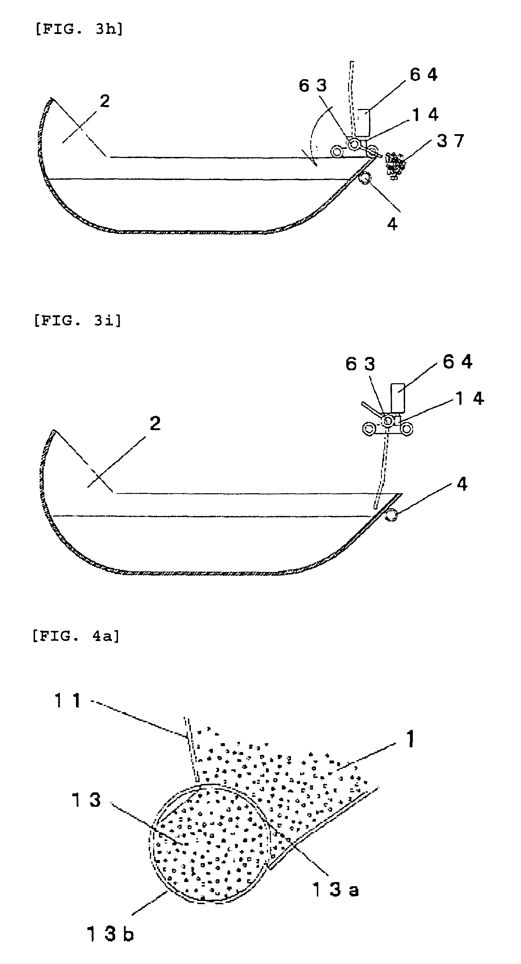

The excrement scooping unit 14 waits at the position shown in FIG. 3a, and starts to move after the cat sensor detected the cat in the set container 2 and the time, required by the excrement 37 to appropriately harden with the litter 1, has passed. In the above state, as shown in FIG. 3b, the excrement scooping unit 14 primarily moves downward along the inclined end wall of the set container 2. When the end of the excrement scooping unit 14 during the downward movement reaches the bottom wall of the set container 2, the unit 14 moves horizontally and collects the excrement 37 as shown in FIG. 3c.

When the excrement scooping unit 14 stops its horizontal movement at the position shown in FIG. 3d, a shaft rotating motor 64 rotates a shaft 63 of the excrement scooping unit 14. Thus, the end of the excrement scooping unit 14 moves along the R-shaped end wall of the set container 2 and scoops up the excrement 37 as shown in FIG. 3e. During the excrement scooping operation, the excrement scooping unit 14 may scoop up the usable litter, so that the excrement scooping unit 14 vibrates forwards and backwards as shown in FIG. 3f, thus dropping the usable litter 1 onto the container 2.

After the usable litter 1 has completely dropped onto the container, the excrement scooping unit 14 moves as shown in FIG. 3g until it reaches the upper end of the inclined end wall of the set container 2. When the excrement scooping unit 14 reaches the upper end of the inclined end wall of the set container 2, the unit 14 stops its movement and is rotated around its rotating shaft, thus dropping the excrement 37 on the hopper as shown in FIG. 3h. After dropping the excrement, the shaft 63 is rotated in a reverse direction, so that the end of the excrement scooping unit 14 is directed downward as shown in FIG. 3i and the excrement scooping unit 14 is stopped at the position of FIG. 3a.

The litter supply unit 13 is placed above the set container 2 as shown in FIG. 2. The litter receiving part 11 contains therein the litter 1 and is connected to the litter supply unit 13.

The litter supply unit 13 has a cylindrical barrel, as shown in FIG. 4a, with two circular discs closing both ends of the cylindrical barrel, and is rotatably supported at the intermediate portion thereof by a motor (not shown). The litter supply unit 13 includes an open part 13a, which is formed around the outer circumferential surface of the cylindrical barrel by cutting the cylindrical barrel within an angular range of about 120 degrees, and a closed part 13b defining the remaining part of the cylindrical barrel. As shown in FIG. 4a, when the closed part 13b is directed outside the litter receiving part 11 and the open part 13a is directed to face the interior of the litter receiving part 11, the litter 1 is not discharged from the litter supply unit 13.

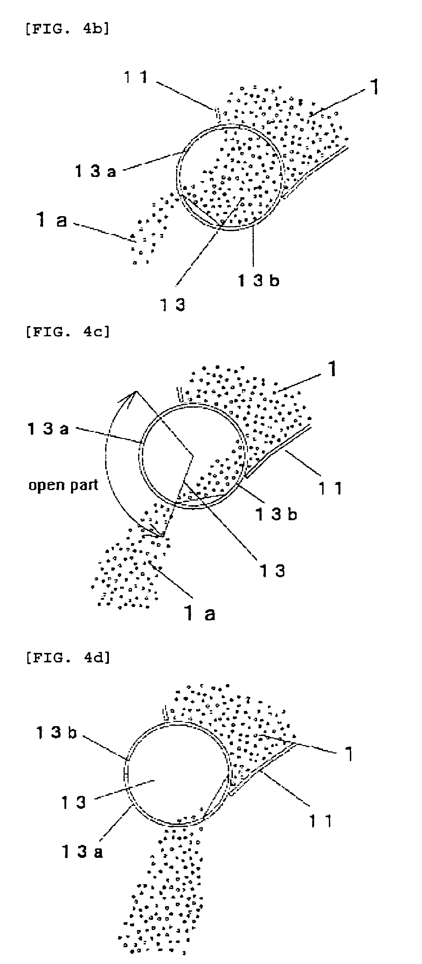

To start the supply of the litter, the litter supply unit 13 is rotated, so that the lower edge of the open part 13a is lowered below the horizontal position as shown in FIG. 4b. Thus, the litter, contained in the litter supply unit 13, starts to drop along the path 1a of the litter. In the above state, the open part 13a still communicates with the litter receiving part 11, so that some litter 1 is directly supplied from the litter receiving part 11 to the container 2 through the litter supply unit 13.

When the litter supply unit 13 is further rotated such that the open part 13a is moved outside the litter receiving part 11 as shown in FIG. 4c, the litter 1 is discharged from the litter supply unit 13. If the litter supply unit 13 reaches the position of FIG. 4d, at which the open part 13a is directed completely downwards, the litter 1 is completely discharged from the litter supply unit 13. In other words, the litter supply unit 13 becomes empty.

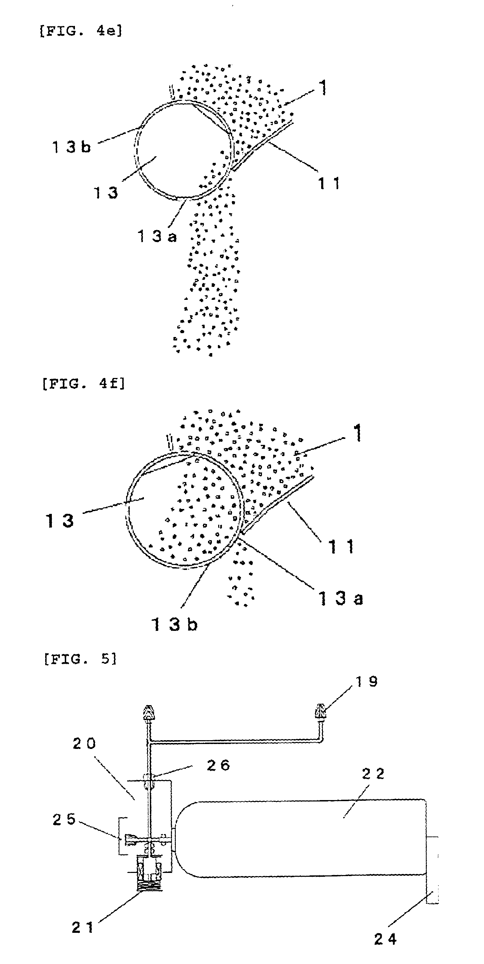

While the litter supply unit 13 is rotated to reach the position of FIG. 4e, the open part 13a is moved toward the litter receiving part 11. During the above-mentioned movement, some litter 1 is directly supplied from the litter receiving part 11 to the container 2 through the litter supply unit 13. However, when the litter supply unit 13 is further rotated, the direct supply amount of the litter from the litter receiving part 11 is gradually reduced as shown in FIG. 4f, and the litter 1 is gradually accumulated in the litter supply unit 13.

According to the capacity of the litter supply unit 13, the number of rotations of the litter supply unit 13 to appropriately supply the litter to the set container 2 may be controlled to be two rotations or three rotations.

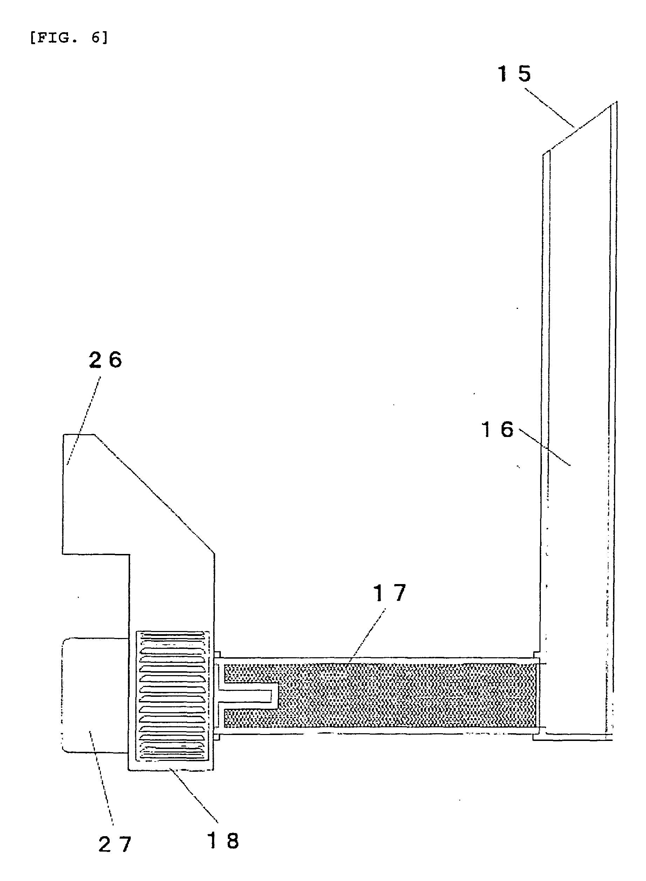

FIG. 5 is a view illustrating a deodorant spraying unit. A deodorant tank 22 of the deodorant spraying unit stores a deodorant in a metal pressure vessel, with LPG or compressed gas as a spraying gas, and is mounted to the valve 20 using a lever 24 which secures the bottom wall of the tank 22. The valve 20 includes an electronic solenoid 21, a pressure sensor 25, and an output connector 26. The output connector 26 is connected to spraying nozzles 19 through a connection pipe.

When the cat sensor 23 detects a cat in the set container 2 and, thereafter, detects the cat leaving the container, the toilet door is closed and, after about two seconds has passed from the closing of the door, the electronic solenoid 21 is operated and deodorant is sprayed into the toilet.

When the pressure gas used as the spraying gas is a combustible gas, such as LPG, it is preferable to close the door and to spray the deodorant after ten minutes have passed from the time that the sensor sensed a cat in the set container and sensed the cat leaving the toilet, because, when the time counted by the timer is less than five minutes, the amount of combustible gas may be determined to highly increase.

When the electronic solenoid 21 is not operated and the residual pressure detected by the pressure sensor 25 is reduced, a display lamp (not shown) is turned on. Furthermore, if the spraying gas is a combustible gas, such as LPG, the spraying of deodorant is stopped. If the amount of remaining deodorant to be sprayed with the combustible gas is low, the ratio of the combustible gas relative to the sprayed deodorant increases. Thus, it is necessary to set the concentration of the spraying gas below a predetermined level.

Basically, the spraying pressure gas preferably contains compressed air, in consideration of the cat's health, and another gas, such as Freon gas, may be used as the spraying gas as long as the gas does not adversely affect the environment, such as deteriorate the ozone layer.

FIG. 6 is a view showing an air conditioning unit acting as a deodorizing unit provided in the toilet to improve the atmosphere in a room having the toilet. The interior of the toilet casing unit is maintained at negative pressure, so that most air is drawn into the toilet through the door 7. Thus, odors do not directly diffuse into the room through a gap defined by the door, the discharge port of the packaging material, or the roof door of the litter receiving part.

Odorous air is collected through the odor port 15 and is fed to a first end of the deodorizing filter 17 through the duct 16, so that odors are removed from the air using the deodorizing filter 17. At a second end of the deodorizing filter 17, the sirocco fan 18 is rotated, thus drawing the odorless air and discharging the odorless air to the room having the toilet through an exhaust duct 26.

The drive power for the sirocco fan 18 is generated by a fan motor 27. Basically, the sirocco fan 18 is always in an activated state. In the above state, the operation of the sirocco fan 18 may be operated in a power saving mode, in which the sirocco fan 18 enters a strong wind mode at the time that the sensor 23 detects a cat excreting in the set container 2 or on the litter and, thereafter, the operation of the fan 18 is changed to a mild wind mode after the timer has completely counted ten minutes after the excretion, thus saving power. Furthermore, the deodorizing filters 17 are consumable goods, so that the filters 17 can be periodically changed with new ones and lengthen the expected life span of the sirocco fan 18.

Cat's urine emits particularly severe odors, so that odors may diffuse into a room from the cat's urine until the litter is appropriately hardened. Thus, in the case of a pet toilet which is a litter box specifically for cats, the mode conversion from the strong wind mode to the mild wind mode is preferably set to a time after the litter becomes hardened, in consideration of the power saving function of the sirocco fan 18 and the expected life span of the deodorizing filter 17.

The deodorizing filter 17 has a deodorizing function of filtering odorous air to remove odors. However, the filtering function of the deodorizing filter 17 may be replaced by spraying or atomizing a small quantity of deodorant. The deodorizing technique using a deodorizing filter is a typical technique, in which activated carbon particles or nonwoven fabric having a silicon dioxide coating or a zinc oxide coating are used as a filtering means. The deodorizing technique using deodorant is specifically effective to remove ammonia gas, but this technique is problematic in that it must use a spraying means having a short life span.

The deodorant to be sprayed may be aromatic oil, in which a liquid having purified high polymer amphoteric polyacrylamide is actually vapor-diffused, or a deodorizing agent produced by mixing and vapor-diffusing a deodorant in high polymers and hardening the mixture. Using a deodorant to remove odors is advantageous in that a reduction in the deodorizing ability of the deodorant can be easily and visually checked by an owner from deformation of the shape or variation in the volume of the deodorant, so that the owner can quickly change an ineffective deodorant with a new one.

If a deodorizing filter having an excellent function is used as the deodorizing filter 17, the deodorant spraying unit shown in FIG. 5 need not be installed in the device.

FIG. 7 illustrates a drive unit to dump litter 1 from the set container 2. The set container 2 includes a tilting shaft 28 provided on the outer surface of each sidewall thereof, with an actuating arm 29 movably placed just below the tilting shaft 28. A first end of the actuating arm 29 is supported by an arm rotating shaft 30, while a second end of the actuating arm 29 is rounded to form a semicircular shape that surrounds the tilting shaft 28. At a position slightly spaced apart from the intermediate portion of the actuating arm 29 toward the rotating shaft 30, a tilting link 31 is coupled at a first end thereof by a hinge to the actuating arm 29. The second end of the tilting link 31 is coupled by a hinge to a rack gear 32 at an intermediate position thereof.

A pinion gear 33 engages with the rack gear part formed along the lower edge of the rack gear 32, with a drive gear being concentrically integrated with the pinion gear 33 and engaging with a worm 34. The worm 34 is mounted to the output shaft of a set container tilting motor 35.

When the set container tilting motor 35 rotates, the drive gear, which is concentrically integrated with the pinion gear 33 and engages with the worm 34, is rotated, so that the pinion gear 33 is rotated and moved horizontally towards the rotating shaft 30. In the above state, the pinion gear 33 is supported by a slide surface (not shown) so that the pinion gear 33 can be moved only in a horizontal direction.

When the pinion gear 33 is moved horizontally as described above, the tilting link 31 pushes upwards the actuating arm 29 supported by the rotating shaft 30. Thus, the tilting shafts 28, which are provided on opposite sidewalls of the set container 2, are biased upwards by the actuating arms 29. In the above state, each tilting shaft 28 can slide along an associated actuating arm 29 toward the semicircularily rounded end of each actuating arm 29. Thus, the set container 2 is gradually rotated around the support shaft 4, which acts as a rotating shaft, thus being tilted upwards. Thus, the litter 1 drops from the set container 2 into a hopper 5 due to the inclination of the tilled set container 2. When the set container 2 completely reaches the fully tilted position, a sensor (not shown) detects the position of the container 2 and stops the operation of the set container tilting motor 35. In the above state, the tilting shafts 28 are held by the semicircularily rounded ends of the actuating arms 29, so that the set container 2 is prevented from overturning.

After the litter 1 is dumped from the set container into the hopper, the set container tilting motor 35 is rotated in a reverse direction to return the set container 2 to its original horizontal position. When a sensor (not shown) detects that the set container 2 has reached its original horizontal position, the sensor stops the set container tilting motor 35. The above-mentioned operation is executed when the sensor 23 detects that no pet is present in the toilet casing unit 3.

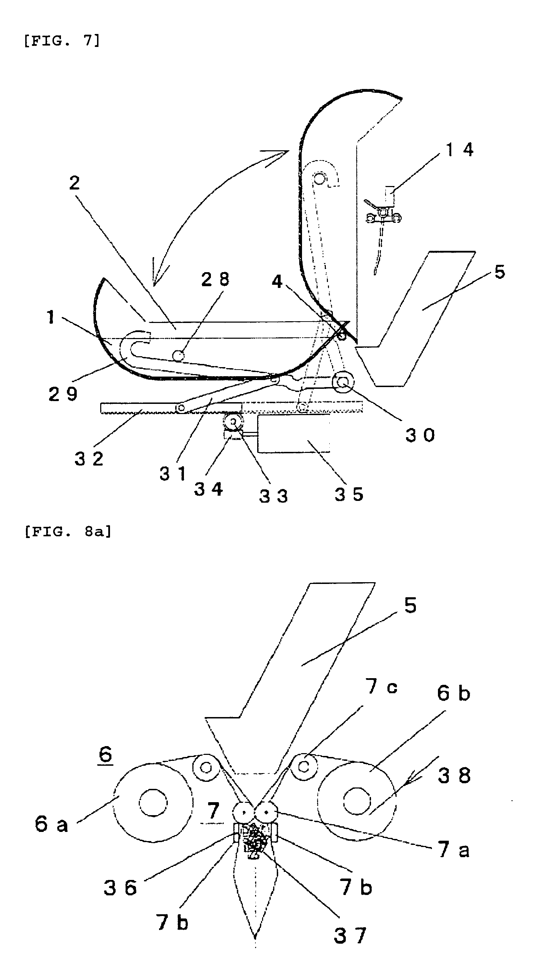

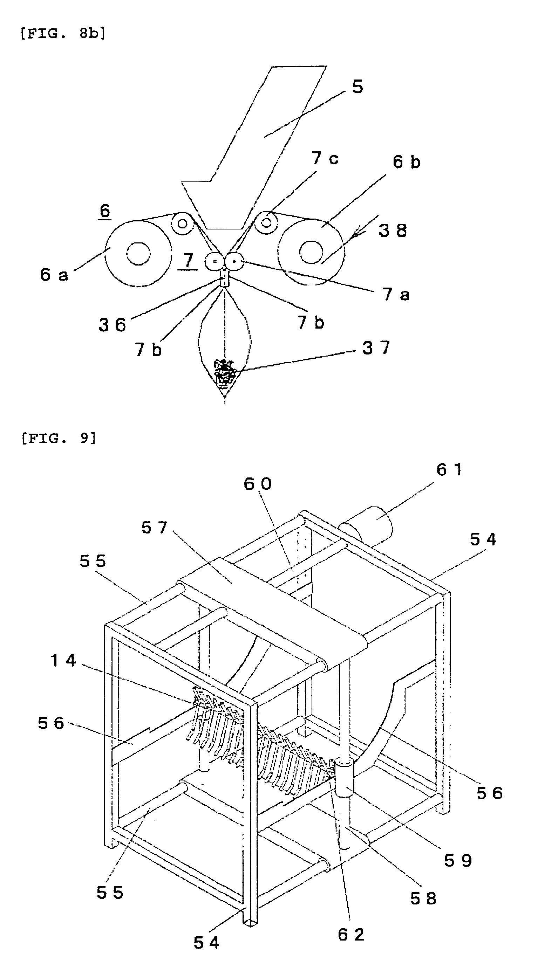

FIGS. 8a and 8b illustrate the packaging part.

The packaging part 7, which is placed below the hopper 5, includes two packaging part guide rollers 7c to supply respective sheets of packaging material 6a and 6b.

The packaging material 6a is produced by winding a sheet of transparent packaging material in a roll shape, and includes a durable base sheet made of cellophane paper or oil paper made of, for example, polyethylene having 80 micron thickness. The packaging material 6b is produced by winding a sheet of black opaque packaging material in a roll shape, and includes a durable base sheet made of cellophane paper or oil paper made of, for example, polyethylene 80 microns thick. A light transmittance sensor 38 is provided at a position near the black opaque packaging material 6b, thus turning on an alarm lamp when the remaining amount of opaque packaging material 6b is low.

Two heat rollers 7a thermally seal 5 mm wide portions of opposite sides of the two sheets of packaging materials 6a and 6b, which have been supplied by respective packaging part guide rollers 7c, thus forming a packaging bag.

When newly setting the sheets, the heat rollers 7a are close to each other. When setting the sheets of packaging materials 6, the heat rollers 7a can be separated from each other, so that the two overlapping sheets may pass through the gap between the two rollers 7a. Thereafter, a packaging material feed switch (not shown) is manipulated to operate the sealing bars 7b once, thus completing the setting operation.

The sealing bars 7b to seal the packaging bag having a predetermined length include a pair of angled bars, at least one of which acts as a heater bar having a heater while the other acts as a pressure bar including PTFE, which is a fluoric resin and is formed around the outer surface of the pressure bar. The heater bar having the heater is provided with a cutter 36 along its center, thus simultaneously cutting the packaging bag and sealing the packaging bag. Thus, the end of the packaging bag is kept in a sealed state after the excrement 37 is packaged.

FIG. 8a illustrates an excrement inlet part, into which the excrement 37 is initially guided, and at which the heat rollers 7a are operated to wait to handle the excrement 37 according to the size and amount of the excrement 37. When the excrement 37 is dumped into the excrement inlet part, the heat rollers 7a are slightly moved, and the pair of sealing bars 7b are moved close each other to thermally seal and cut the packaging bag at the same time. Thereafter, the packaged and sealed excrement 37 is discharged from the toilet casing unit 3.

For example, when old litter 1 is discarded and is replaced with new material, the set container tilting motor 35 and the heat rollers 7a are preferably operated synchronously such that their positions correspond to each other. In the above state, the packaging is preferably executed without causing any problem, such as packaging error. If the positions of the set container tilting motor 35 and the heat rollers 7a do not correspond to each other, a large quantity of litter 1 may drop into the hopper 5, but the heat rollers 7a may fail to synchronously move. In the above state, several problems, such as packaging error or blocking of the hopper by the packaging material, may occur.

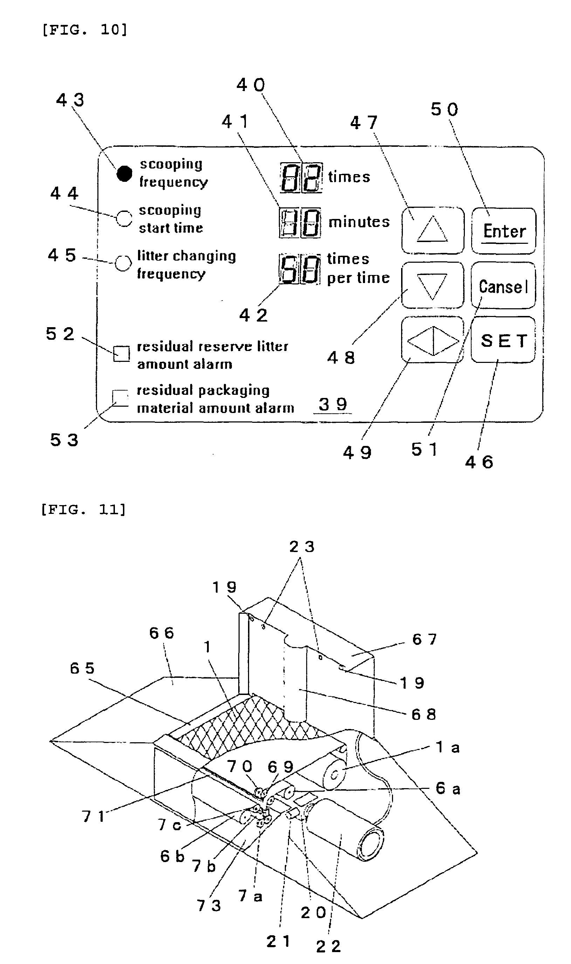

FIG. 9 illustrates the operation of the excrement scooping unit 14.

The excrement scooping unit 14 includes two movable parts, which are a vertical movable part and a horizontal movable part, with a casing frame 54 which is fabricated using the two movable parts such that the two movable parts are movable in the frame 54. Two sectional frames are coupled to each other using four horizontal slide shafts 55. Two traveling rails 56 are mounted to the two sectional frames.

The four horizontal slide shafts 55 are coupled to each other by two support plates 57 which are connected to each other by two support shafts 58, with a thrust bearing 59 mounted on each of the support shafts 58.

A drive shaft 60 passes through the upper support plate 57. In other words, the shaft passing hole of the support plate 57 is internally threaded and the drive shaft 60 is externally threaded and engages with the internal thread of the shaft passing hole of the support plate 57. However, no screw engagement is provided between the casing frame 54 and the support plate 57. A feed motor 61 is mounted to a first end of the drive shaft 60, so that, when the drive shaft 60 is rotated, the support plate 57 is moved along the horizontal slide shafts 55 by the rotation of the drive shaft 60 due to screw engagement of the support plate 57 with the drive shaft 60.

The thrust bearings 59 support movement of the excrement scooping unit 14 so that, when the drive shaft 60 is rotated and the support plate 57 is rotated, traveling rollers 62 provided in the excrement scooping unit 14 move along the respective traveling rails 56, thus causing the thrust bearings 59 to move vertically in opposite directions.

The vertical movement of the vertical movable part in the excrement scooping unit 14 is executed along the traveling rails 56, so that upward movement of the vertical movable part can be ensured and downward movement can be caused by the weight of the excrement scooping unit 14. Thus, the vertical movable part of the excrement scooping unit 14 may not move downward, depending on the granule shape of the litter in the set container. In the above state, the vertical movable part of the excrement scooping unit 14 may be biased downward using a screw or by designing the traveling rails 56 to further bias the vertical movable part downward.

FIG. 10 illustrates a control panel 39.

At an initial stage, a scooping frequency setting counter 40, a scooping start time setting counter 41, and a litter changing frequency setting counter 42 are in a zero state. Furthermore, a scooping frequency setting lamp 43, a scooping start time setting lamp 44, and a litter changing frequency setting lamp 45 are turned off.

When a set setting key 46 is manipulated, the scooping frequency setting lamp 43 is turned on at the initial stage and, at the same time, the lamp of the ones digit part of the scooping frequency setting counter 40 flashes. When an increment key 47 or a decrement key 48 is manipulated, the ones digit displayed on the scooping frequency setting counter 40 may gradually increase or decrease. When it is required to set the tens digit part of the scooping frequency setting counter 40, an order change key 49 is manipulated. Thus, the ones digit part of the scooping frequency setting counter 40 is stopped in an ON state, while the tens digit part of the scooping frequency setting counter 40 flashes, so that the tens digit part of the scooping frequency setting counter 40 can be set to a desired number by manipulating the increment key 47 or the decrement key 48.

This drawing shows the scooping frequency set to two times. If the scooping frequency has been completely set, an enter key 50 is manipulated to confirm the setting. Thus, the scooping frequency setting lamp 43 is turned off, while the scooping frequency setting counter 40 displays the set scooping frequency thereon. In addition, the scooping start time setting lamp 44 is turned on, and the ones digit part of the scooping start time setting counter 41 flashes. In the above state, the increment key 47, the decrement key 48, and the order change key 49 are manipulated to set the time required to harden the litter.

When it is desired to confirm the setting of the scooping start time, the enter key 50 is manipulated to confirm the setting. If it is required to change the set value, a cancel key 51 is manipulated, thus returning to the previously set time. In the drawing, the scooping start time has been set to ten minutes and the setting has been confirmed without manipulating the cancel key 51. Thus, the litter changing frequency setting lamp 45 is turned on, and the ones digit part of the litter changing frequency setting counter 42 flashes. In the above state, the increment key 47, decrement key 48, and the order change key 49 are manipulated to set a litter changing frequency indicating the number of scooping times per litter changing time. In the embodiment, the litter changing frequency is set to once every fifty times of scooping. Thereafter, the enter key 50 is manipulated to turn on the scooping frequency setting lamp 43 and, at the same time, the ones digit part of the scooping frequency setting counter 40 flashes. After the entire setting process has been completed, the enter key 50 is manipulated. Thus, the scooping frequency setting lamp 43 is turned off, the ones digit part of the scooping frequency setting counter is turned on, and the setting process ends.

The control panel 39 has two alarm lamps, which include a remaining reserve litter amount alarm lamp 52 to be turned on to inform an owner of a reduction in the amount of litter in the litter receiving part below a preset reference level, and a remaining packaging material amount alarm lamp 53 to be turned on to inform the owner of a reduction in the packaging material. In the above state, the light transmittance sensor 38 is used as a sensor to detect the remaining amount of packaging material.

When at least one of the two alarm lamps is turned on, it is preferred to stop the operation of the device associated with the on state of the alarm lamp until the alarm lamp is turned off.

In the embodiment, the scooping frequency is set to two times, the scooping start time is set to ten minutes, and the litter changing frequency is set to once per fifty times of scooping. Thus, after a cat has used the litter box twice, the timer starts its operation and, after the preset scooping start time, ten minutes, has passed, the scooping of excrement is executed once. Furthermore, if the sensor detects that the cat has used the litter one hundred times, it is necessary to replace old litter with fresh litter so that the device does not execute the excrement scooping operation, but starts the operation of replacing the old litter with fresh litter.

The automatic cleaning and packaging device for pet excrement according to the present invention specifically for cats is operated to satisfy the situation in which the device is provided for only one cat and the cat uses the device four times to eight times a day. The automatic cleaning and packaging device of the present invention is placed indoors and all necessities are set in the device prior to turning on the device. After turning on the device, the operation of the device is preset according to the above-mentioned manner.

When the cat first excretes, the sensor 23 detects the first excretion and counts the first use. When the cat excretes secondarily after several hours have passed since the first excretion, the sensor 23 detects the second excretion and counts the second use. At the same time, the timer is operated to wait for ten minutes. When ten minutes have passed, the sensor 23 detects whether the cat is present on the litter. If the cat is not present on the litter, the door 9 is closed. Thereafter, the excrement scooping unit 14 is operated to scoop up the excrement 37 and move it to the hopper 5, and the packaging part 7 packages the excrement 37. In the above state, a small-sized packaging bag is discharged from the packaging bag discharge port 8.

Of course, the amount of litter 1 is reduced due to excrement scooping, so that fresh litter is supplied to the set container by the litter supply unit 13 once per five times of scooping.

After the litter supply unit 13 is operated and has finished supplying litter to the set container, the excrement scooping unit 14 is operated to roughly level the surface of the litter in the container. Thus, the surface of litter 1 in the set container 2 is leveled. During the litter leveling operation, the horizontal movement of the excrement scooping unit 14 is primarily stopped at the position shown in FIG. 3d. The unit 14 is moved backwards and, thereafter, is moved forwards from the position shown in FIG. 3c. The excrement scooping unit 14 repeats the above-mentioned reciprocating motion twice, is returned to its original position and, thereafter, the door 9 is opened.

If the cat excretes on the litter while the timer is operated and waits for the passage of ten minutes, the timer is reset and waits again for the passage of ten minutes.

If the cat excessively excretes on the litter several times within a short period of time, the excrement scooping unit 14 may fail to efficiently scoop up the excrement. Thus, if the cat repeatedly excretes several times exceeding a predetermined reference time within a short period of time, the door 9 is closed and waits for the passage of ten minutes, even though the prohibition of excretion may ill-affect the cat's health.

When the sensor 23 detects that the cat has excreted on the litter one hundred times and, thereafter, detects that the cat has left the container, the sensor closes the door 9 and operates both the set container tilting motor 35 and the heat rollers 7a. As the set container 2 is gradually tilted up, the litter 1 gradually drops into the hopper 5 and is packaged at the packaging part. If necessary, the operation of the set container tilting motor 35 may be intermittently stopped to avoid some expected problems, such as blocking of the hopper 5.

After the old litter 1 is completely dumped, the litter supply unit 13 is operated to supply a predetermined amount of fresh litter 1 to the set container 2. In the above state, the surface of the litter 1 in the set container 2 is leveled and, thereafter, the excrement scooping unit 14 is returned to its original position prior to opening the door 9.

In the above description, the embodiment of the automatic cleaning and packaging device for pet excrement is specifically for cats, however, it should be understood that the embodiment is set forth to illustrate, but is not to be construed as the limit of the present invention as disclosed in the accompanying claims.

Although the number of predicted embodiments of the present invention is not limited, some application techniques of the present invention may be introduced, so that the predicted application techniques will be described herein below.

In the first embodiment of the present invention, the collecting material uses litter 1 having high polymer absorbent, but this is not to be construed as a limit of the present invention. In recent years, collecting materials, which have remarkably improved quality and greatly reduce odor emission into a room, have been proposed and used.

The set container 2 of the present invention is constructed such that one end wall thereof includes an inclined end wall inclined toward the set container bottom wall and the opposite end wall includes an R-shaped end wall. The above-mentioned construction of the set container 2 can simplify the operation of the excrement scooping unit and, at the same time, ensures the disposal of the entire amount of scooped excrement without leaving the excrement in the device. Thus, it should be understood that a set container having a simple rectangular shape may be efficiently used without affecting the function of the present invention if the excrement scooping unit of the present invention is adapted to the container. That is, if a simple rectangular container allows the end of an excrement scooping unit to move down to the bottom wall of the container along a sidewall of the container, move to the opposite sidewall, and move upwards in a state of contact with the sidewall of the container, and, furthermore, allows the excrement scooping unit on the upper end of the container to move parallel to the bottom wall of the container, the excrement scooping unit may efficiently scoop excrement from the simple rectangular container.

The toilet casing unit 3 prevents the emission of odors into a room, and ensures the safety of a pet during the operation of the excrement scooping unit or the change of litter without allowing the pet to approach the device.

The packaging material includes two sheets which are thermally sealed together, but is not limited to the above-mentioned construction. That is, the packaging material of the present invention may include one sheet, which is folded into two leaves, receives excrement therein, and is sealed; an excrement container which receives therein excrement and is sealed along its upper edge using a sealing sheet, thus preventing odor emission from the excrement; or a packaging material using a tape or adhesive to seal the packaging material, without departing from the scope and spirit of the invention as disclosed in the accompanying claims.

Furthermore, the packaging part may be altered according to variation in the construction and operation of the packaging material, thus efficiently using the packaging material. Of course, various modifications, additions and substitutions are possible, without departing from the scope and spirit of the invention, if they can package pet excrement therein, prevent emission of odors from the pet excrement, and allow the packaged excrement to be easily discarded.

The door of the present invention prevents a cat from approaching the device during the operation of the excrement scooping unit. That is, the door is provided to ensure the safety of a cat, but may be omitted from the device without affecting the function of the present invention. In place of the door, another means for ensuring the safety of the cat may be used in the device of the present invention. However, use of the sensor 23 is required. In the present invention, the sensor 23 detects the toilet casing unit. Thus, if the sensor 23 detects that a cat is present around the toilet during operation of the excrement scooping unit, the sensor may stop the operation of the excrement scooping unit or allow the owner to move the cat to a place where it is not disturbed by the operation of the excrement scooping unit. Furthermore, if the sensor 23 detects that the excrement scooping unit abruptly stops or suddenly restores its original position, or detects that a cat is brought into contact with the excrement scooping unit, the sensor 23 quickly stops the operation of the excrement scooping unit. If the sensor 23 detects that the cat has not been present around the excrement scooping unit for a predetermined lengthy period, the sensor may allow resumption of the operation of the excrement scooping unit.

The excrement scooping unit 14 according to the embodiment has a comb-shaped structure, but may have a mesh-shaped structure in place of the comb-shaped structure without affecting the functioning of this invention. This excrement scooping unit, after scooping up the excrement, preferably vibrates, thus causing usable litter to drop from the unit 14 onto the container 2.

The excrement scooping unit is preferably constructed such that the intervals between teeth of the unit may be adjustable or the unit may use a changeable tooth attachment, thus enhancing the function of the excrement scooping unit and allowing the unit to be usable with a variety of litter without being limited by the type of litter. The intervals between teeth of the excrement scooping unit are closely related to the granule size and shape of the litter. Thus, the intervals between teeth of the excrement scooping unit of the present invention may be adjusted to be narrower if fine granule litter is used. Furthermore, if the excrement scooping unit uses a changeable tooth attachment, the excrement scooping unit may be easy to wash or handle. Furthermore, to provide an excrement scooping unit which is easier to wash or handle, the unit is preferably designed such that the electric part thereof may be separated from the other parts as desired. Thus, the excrement scooping unit may efficiently maintain its operational function although it is washed once a year (this yearly washing work may be neglected without ill-affecting the functioning of the unit), and may reduce the expected problem of breakage of the unit.

The litter receiving part or the litter supply unit is preferably used with the device of the present invention. Due to the functions provided by the litter receiving part and the litter supply unit, the owner may be free from manual replacement of the old litter and may avoid problems caused by miscalculation of the amount of old litter. Furthermore, even if the owner neglects to care for the device for a lengthy period, the litter receiving part may execute its normal function without failure as long as it contains litter therein.

The deodorizing function, executed by a deodorizing unit including the odor port or the deodorizing filter, may improve the living environment. As described above, the deodorizing unit is preferably operated in a power saving mode, in which it enters a high speed blowing mode just after excretion and maintains the high speed blowing mode while excrement remains on the litter and, thereafter, the operation is changed to a low speed blowing mode after the excrement is packaged. The deodorizing filter preferably uses an enhanced deodorant or filter as has been proposed in recent years. Furthermore, the present invention may use a recently developed deodorant, without departing from the scope and spirit of the invention as disclosed in the accompanying claims, as long as the device includes the construction disclosed in the accompanying claims.

Like the case in which deodorant and aromatic may be used together in the device of the present invention, the aromatic may be used alone. The term "deodorant" used in the description means one that may also include aromatic.

As described above, the deodorant is used to improve the living environment of owners raising pets, so that the deodorant of the present invention may be replaced with an aromatic to mitigate the worsening of the living environment due to odors, or a deodorization unit using an ozonizer, anionizer, or antiseptic solution atomizer, without affecting the function of the invention.

Furthermore, a variety of tanks having different shapes may be used in the present invention to store deodorant therein, without departing from the scope and spirit of the invention as disclosed in the accompanying claims, as long as the device includes the construction disclosed in the accompanying claims.

### Second Embodiment

### (Dog Excrement)

FIG. 11 illustrates an automatic cleaning and packaging device according to a second embodiment of the present invention, which is specifically for dogs, particularly indoor dogs.

In the case of a dog toilet, the collecting material includes a thick nonwoven fabric sheet impregnated with high polymer absorbent. This sheet-shaped collecting material is installed in the device as a roll-type collecting material 1a.

The casing 65 has an angled casing structure, the width of which is larger than that of the sheet-shaped collecting material. Part 1 of the roll-type collecting material 1a is fed and exposed outside the upper surface of the casing 65. Each side of the casing 65 is provided with a sloped surface 66 to allow a small dog to go up the upper surface of the casing 65. A covering wall 67 to prevent scattering of excrement is installed at the rear end of the casing 65, with a urination target 68 provided on the side surface of the covering wall 67 to allow a male dog to urinate while raising up and orienting one of its two rear legs toward the urination target 68.

The covering wall 67 is provided with a sensor 23 and a spraying nozzle 19 so that, if the sensor 23 detects that a dog is continuously present on the upper surface of the casing 65 for a predetermined lengthy period, the sensor 23 determines that the dog has excreted on the collecting material 1.

As in the above-mentioned litter box, which is the cat toilet, the spraying nozzle 19 of the deodorizing unit is operated in conjunction with a valve 20, an electronic solenoid 21, and a deodorant tank 22, and sprays deodorant. The spraying nozzle 19 is placed outside the casing 65, while the other parts of the deodorizing unit are placed in the casing 65.

Inside the casing 65, both a transparent packaging material 6a and an opaque packaging material 6b, constituting the packaging material specifically for dog excrement, are installed such that a sheet of the collecting material 1 having dog excrement thereon can be packaged by the packaging material. Two feed rollers 69 to feed the sheet-shaped collecting material 1 to the packaging part are placed below opposite ends of the sheet part of the collecting material. Pressure rollers 70 press down the upper surface of the sheet-shaped collecting material 1 so that, when the feed rollers 69 are rotated, the sheet-shaped collecting material 1 is fed to the packaging part 6. In the above state, after a desired part of the collecting material 1a is fed to the upper surface of the casing 65, the rotation of the feed rollers 69 stops, based on the rpm of each of the feed rollers 69. Thereafter, a collecting material cutter 71 is operated to cut the contaminated collecting material 1 from the remaining part of the collecting material.

The packaging material of this invention preferably has a width larger than that of the collecting material 1.

The packaging part of the dog toilet has the same construction as that of the cat toilet.

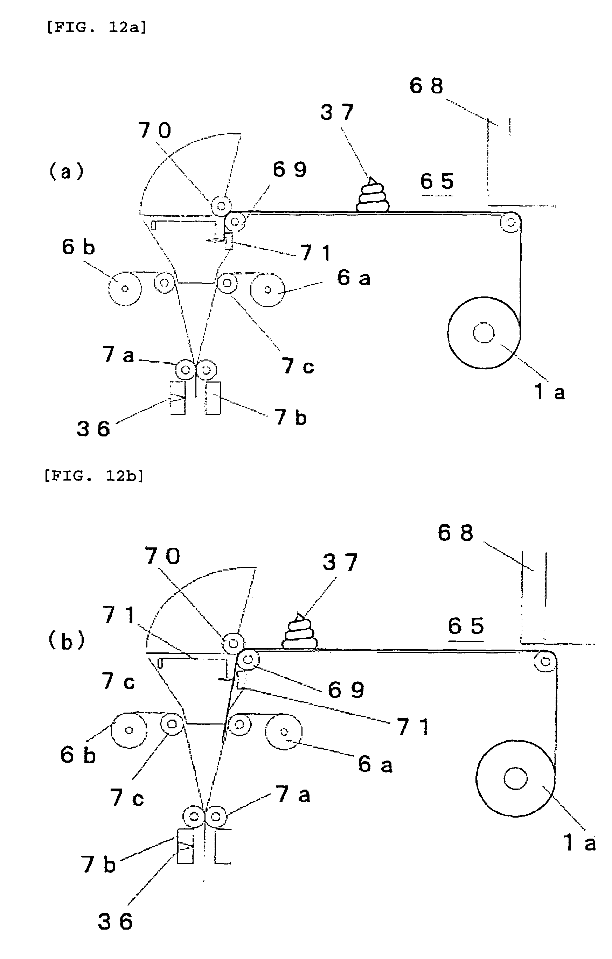

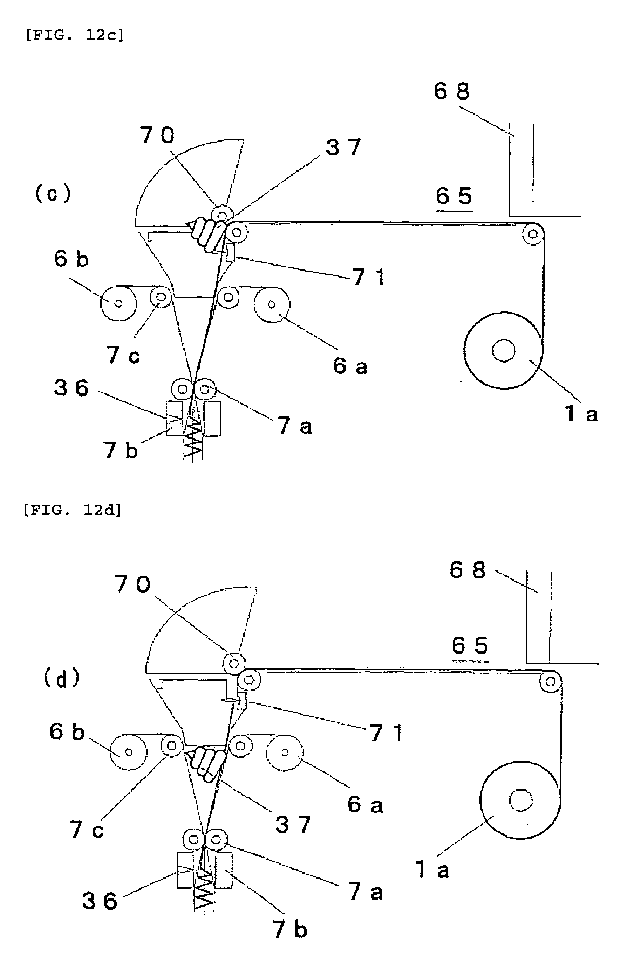

As shown in FIG. 12a through FIG. 12d, the packaging material is input to the packaging part by two packaging part guide rollers 7c which guide respective pieces of packaging material 6a and 6b.

The packaging material 6a is produced by winding a sheet of transparent packaging material in a roll shape, and includes a durable base sheet made of cellophane paper or oil paper made of, for example, polyethylene having 80 micron thickness. The packaging material 6b is produced by winding a sheet of black opaque packaging material in a roll shape, and includes a durable base sheet made of cellophane paper or oil paper made of, for example, polyethylene 80 microns thick. A light transmittance sensor 38 is provided at a position near the black opaque packaging material 6b, thus turning on an alarm lamp when the remaining amount of opaque packaging material 6b is low.

If a dog excretes on the casing 65, dog excrement 37 is laid on the collecting material 1, as shown in FIG. 12a. Because the collecting material 1 is impregnated with the high polymer absorbent, liquid excrement reacts with the high polymer absorbent, thus being hardened. After the excrement is appropriately hardened, the feed rollers 69 are rotated. Unlike litter 1 which is collecting material specifically for cats, the sheet-shaped collecting material 1 quickly reacts with excrement and appropriately hardens the excrement within about one minute. If the sensor 23 installed on the covering wall 67 detects that a dog has been continuously present on the collecting material 1 for thirty seconds or more, the sensor 23 determines that the dog has excreted. Thus, the sensor 23 operates the feed rollers 69 and the heat rollers 7a. In the above state, to conserve the packaging material, it is preferred to rotate the feed rollers 69 such that the rollers 69 can feed an amount of packaging material corresponding about half of one sheet.

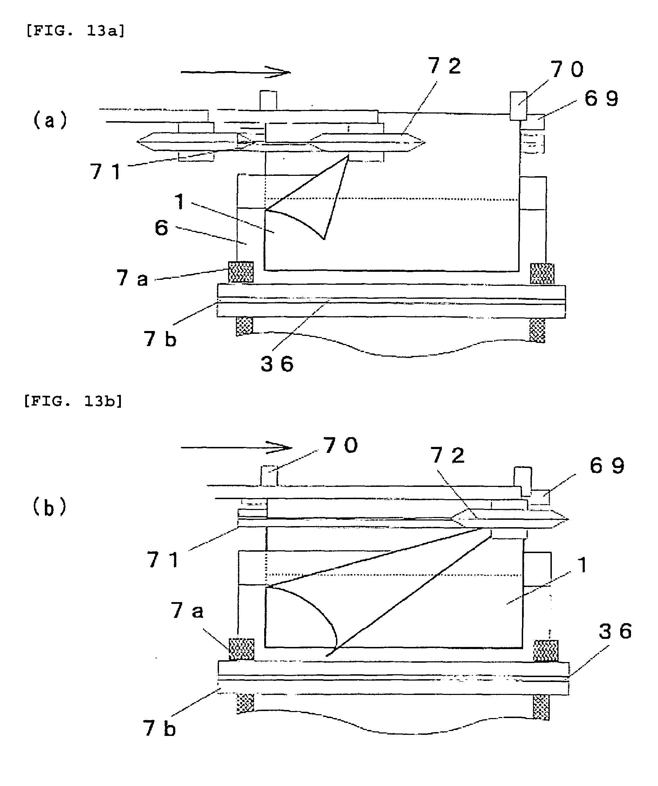

Encoders, provided around both the feed rollers 69 and the heat rollers 7a, count the rpm of the two types of rollers 69 and 7a, and measure the length of a fresh part of the sheet-shaped collecting material 1a which has been fed to the upper surface of the casing 65 (see FIG. 12b). Thus, dog excrement 37 drops into the packaging part 7 after passing through the pathway between the pressure rollers 70 (see FIG. 12c). When the end of the contaminated part of the collecting material 1 has reached a collecting material cutter guide 71, the feed rollers 69 and the heat rollers 7a stop their operation and, at that time, a roller cutter blade 72, which has waited outside an edge of the sheet-shaped collecting material 1, moves perpendicular to a lengthwise direction of the sheet-shaped collecting material 1, thus cutting and separating the contaminated part from the remaining part of the collecting material (see FIG. 13a and FIG. 13b). In the above state, the roller cutter blade 72 moves along a guide groove of the collecting material cutter guide 71, thus reliably cutting the collecting material without failure. When the roller cutter blade 72 has completely moved from side to side and has completely cut the contaminated part from the sheet-shaped collecting material 1, the roller cutter blade 72 is returned to its original position. In the above state, the cut sheet-shaped collecting material 1 dropped into the packaging part so that, after confirming the return of the roller cutter blade 72 to its original position, the operation of the heat rollers 7a is started again. As shown in FIG. 12d, both the dog excrement 37 and the cut part of the sheet-shaped collecting material 1 are fed to the packaging part where they are packaged.

After the cutting operation, the heat rollers 7a are operated again. When the cut position of the sheet-shaped collecting material 1 exceeds the sealing bars 7b, the two sealing bars 7b, which have been spaced apart from each other, are moved close to each other, thus executing the sealing operation and the cutting operation at the same time. The dog excrement 37, which has been packaged together with the cut part of the collecting material 1, slides down along a chute 73 shown in FIG. 11 and is discharged from the toilet casing unit 3.

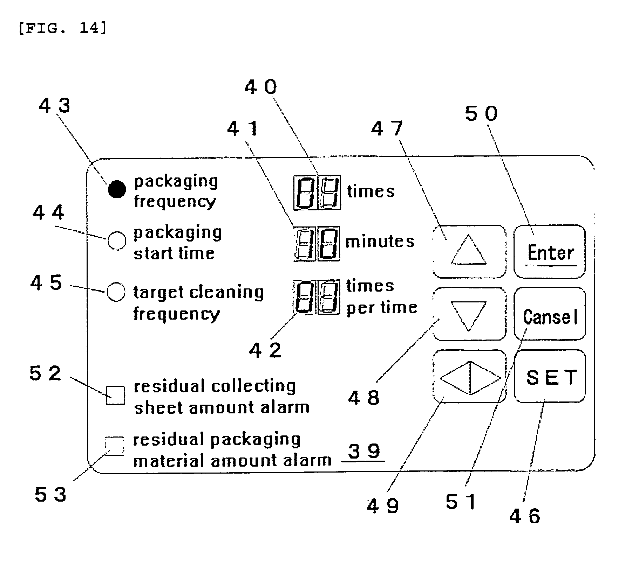

FIG. 14 illustrates a control panel 74 for dog toilets.

At the initial stage, a packaging frequency setting counter 75, a packaging start time setting counter 76, and a target cleaning frequency setting counter 77 are in a zero state. Furthermore, a packaging frequency setting counter 75, a packaging start time setting counter 76, and a target cleaning frequency setting counter 77 are turned off.

When the setting key 46 is manipulated, the packaging frequency setting lamp 78 at the initial stage is turned on and, at the same time, the ones digit part of the packaging frequency setting counter 75 flashes. When the increment key 47 or the decrement key 48 is manipulated, the ones digit displayed on the packaging frequency setting counter 75 incrementally increases or decreases. When it is desired to set the tens digit of the packaging frequency setting counter 75, the order change key 49 is manipulated. Thus, the ones digit part of the packaging frequency setting counter 75 is turned on, while the tens digit part of the packaging frequency setting counter 75 flickers. The tens digit of the packaging frequency setting counter 75 can be set to a desired digit by manipulating the increment key 47 or the decrement key 48.

In the drawing, the packaging frequency is set to one so that the device packages dog excrement every time the dog excretes. When the setting of the packaging frequency is ended, the enter key 50 is manipulated to confirm the setting. In the above state, the packaging frequency setting lamp 78 is turned off and the packaging frequency setting counter 75 displays the set value. Furthermore, the packaging start time setting lamp 69 is turned on, while the ones digit part of the packaging start time setting counter 76 flashes. In the above state, the increment key 47, the decrement key 48, and/or the order change key 49 is manipulated, thus setting the time required to harden the collecting material.

When it is desired to confirm the setting of the packaging start time, the enter key 50 is manipulated to confirm the setting. If it is required to change the set value, the cancel key 51 is manipulated, thus returning to the previously set time. In the drawing, the packaging start time has been set to ten minutes and the setting has been confirmed without manipulating the cancel key 51. Thus, the target cleaning frequency setting lamp 80 is turned on, while the ones digit part of the target cleaning frequency setting counter 77 flashes. In the above state, the increment key 47, the decrement key 48, and the order change key 49 are manipulated to set the target cleaning frequency, indicating the number of dog excretion times per instance of cleaning the covering wall 67 or the urination target 68. In the embodiment, the target cleaning frequency is set to once per excretion. Thereafter, the enter key 50 is manipulated to turn on the packaging frequency setting lamp 78 and, at the same time, the ones digit part of the packaging frequency setting counter 75 flickers.

After the entire setting process has been completed, the enter key 50 is manipulated. Thus, the packaging frequency setting lamp 78 is turned off, the ones digit part of the packaging frequency setting counter 75 is turned on, and the setting process ends.

The control panel 74 has two alarm lamps, which include a remaining collecting sheet amount alarm lamp 81 to be turned on to inform an owner of a reduction in the amount of rolled collecting material below a preset reference level, and a remaining packaging material amount alarm lamp 53 to be turned on to inform the owner of a reduction in the packaging material.

When at least one of the two alarm lamps is turned on, it is preferred to stop the operation of the device associated with the on state of the alarm lamp until the alarm lamp is turned off. Thus, it is preferred to configure the alarm lamps such that they are turned on if the collecting sheet or the packaging material installed in the device is completely consumed.

In the embodiment, the packaging frequency is set to once every excretion, the packaging start time is set to ten minutes, and the target cleaning frequency is set to once per excretion. Thus, after a dog has used the toilet, the timer counts time and, after the preset packaging start time, ten minutes, has passed, the contaminated part of the collecting material is fed to the packaging part.

The automatic cleaning and packaging device for pet excrement according to the present invention specifically for dogs is operated to satisfy the situation in which the device is provided for only one dog and the dog uses the device six times to twelve times a day. The automatic cleaning and packaging device of the present invention is placed indoors and all necessities are set in the device prior to turning on the device. After turning on the device, the operation of the device is preset according to the above-mentioned manner.

When the dog first excretes, the sensor 23 detects the first excretion and counts the first use and, at the same time, the timer is operated to wait for ten minutes. After ten minutes have passed, the sensor 23 detects whether the dog is present on the collecting material. If the dog is not present on the collecting material, the feed rollers 69 and the packaging part 7 are operated to cut and separate the contaminated part from the remaining part of the collecting material and package the contaminated part and the excrement in the packaging material. In the above state, a small sheet-shaped bag is discharged from the casing.

In the above description, the second embodiment of the automatic cleaning and packaging device for pet excrement is specifically for dogs, however, it should be understood that the embodiment is set forth to illustrate, but is not to be construed as the limit of the present invention as disclosed in the accompanying claims.

Although the number of predicted embodiments of the present invention is not limited, some application techniques of the present invention may be introduced, said predicted application techniques being described herein below.

In the first embodiment of the present invention, the collecting material is a roll-type collecting material. However, the collecting material may be altered as a zigzag stacked material or as rectangular sheets evenly overlapping and stacked in the container to be discharged from the container one by one. The alteration of the collecting material stacked in the device of the present invention yields the same effect as that described for the embodiment using the roll-type collecting material, feed rollers 69, and pressure rollers 70.

For example, in the case of rectangular collecting sheets as the collecting material, which evenly overlap one another and are stacked in a rectangular container to be discharged from the container one by one, it is preferred to draw the collecting sheets and feed them to a desired position one by one. In the above case, each of the collecting sheets may be fed by clamping it, feeding it using rollers or pushing it into a nip, without departing from the functioning of the present invention.

In the same manner as that described for the cat toilet, various modifications, additions and substitutions of the packaging part are possible, without departing from the scope and spirit of the invention. Several predicted methods of collecting the contaminated parts of the roller-type collecting material will be described herein below. In the second embodiment of the present invention, the contaminated parts of the roller-type collecting material are put into the packaging part using the feed rollers 69, pressure rollers 70, and collecting material cutter guide 71. However, the method of putting the collecting material into the packaging part is not limited to the above-mentioned method of putting it therein from the cut end thereof. For example, a shuttered circular opening may be formed through the central portion of the upper surface of the casing 65, with a pulling unit provided below the shuttered opening to pull (haul) and collect the contaminated collecting material (by gripping the central portion of each piece of contaminated collecting material) after the shutter has opened. Furthermore, the rectangular sheet-shaped collecting material may be fed to the packaging part by gripping the four corners of the collecting material.

Furthermore, in the embodiment of the present invention, the collecting material passes over the upper surface of the casing 65. However, the transparent packaging material 6a shown in FIG. 12 may be fed to the upper surface of the casing 65, and the roll-type collecting material 1a may be fed over the transparent packaging material 6a. In the above state, if the tension of both the roll-type collecting material 1a and the transparent packaging material 6a is controlled, the transparent packaging material 6a and the roll-type collecting material 1a may be fed at different feeding speeds.

The covering wall 67 is provided with the urination target 68. A male dog may excrete such that the excrement directly contaminates the urination target 68. Thus, the urination target 68 is required to be washed so that the device may be provided with a water tank, a water supply tube connected to the water tank, a water spray nozzle placed at a position above the urination target 68 of the covering wall 67 to spray water from the tank, and a water pump connected to the water supply tube and the water spray nozzle and feeding water from the tank to the spray nozzle, thus causing the water from the nozzle. In the above case, after a male dog has used the toilet, the spray nozzle sprays water to flush the urination target 68 of the covering wall 67 and remove urine from the urination target. Thereafter, the contaminated part of the roll-type collecting material may be packaged.

In the above state, water in the tank preferably includes deodorant, antiseptic solution, or aromatic and is preferably sprayed from the spray nozzle. Furthermore, a liquid may be sprayed from the gap between the covering wall 67 and the roll-type collecting material such that it flushes the covering wall 67. Furthermore, a flexible pole is preferably placed at the intermediate portion of a roll of roll-type collecting material such that the intermediate portion of the roll-type collecting material can be placed lower than the other portions. Use of the pole is preferred to prevent the unused part of the roll-type collecting material from contamination.

Furthermore, the second embodiment of the present invention provides the open toilet, which may have the toilet casing unit, and which is specifically for dogs. However, the toilet casing unit may be used in the toilet specifically for cats.

The open structure of the dog toilet reflects the fact that the dog toilet uses the roll-type collecting material and safely packages dog excrement along with the collecting material in the packaging material. Thus, the operation of the device of the invention may be started by a sensor that detects that no dog is present on the roll-type collecting material. However, in an another application, in which the roll-type collecting material is fed to the packaging part, it is preferred to use a toilet casing unit capable of restricting dogs from entering the device during operation. In the above state, the operation of the dog toilet remains similar to that of the toilet specifically for cats.

### Third Embodiment

### (Caged Bird Excrement)

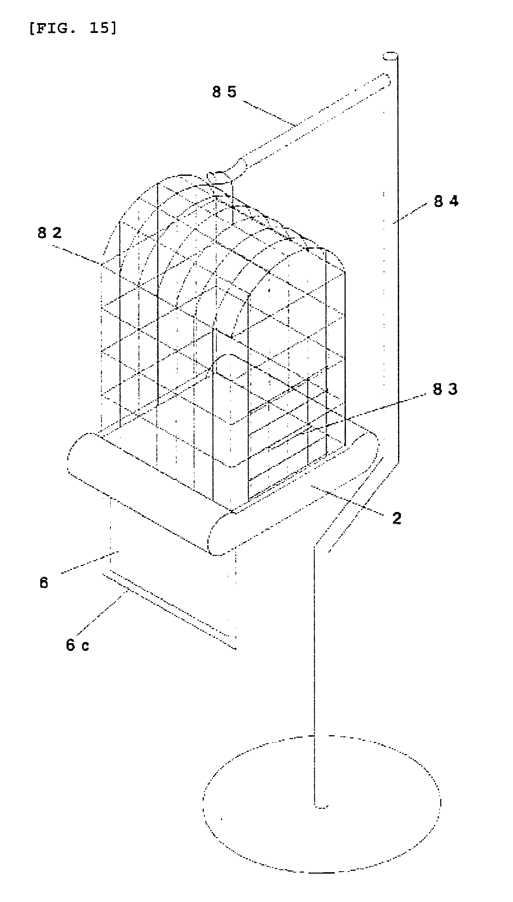

FIG. 15 is a perspective view illustrating an automatic cleaning and packaging device according to a third embodiment of the present invention, which is specifically for caged birds.

In the case of the toilet specifically for caged birds, collecting material 1 and a set container 2 are placed below a cage 82.

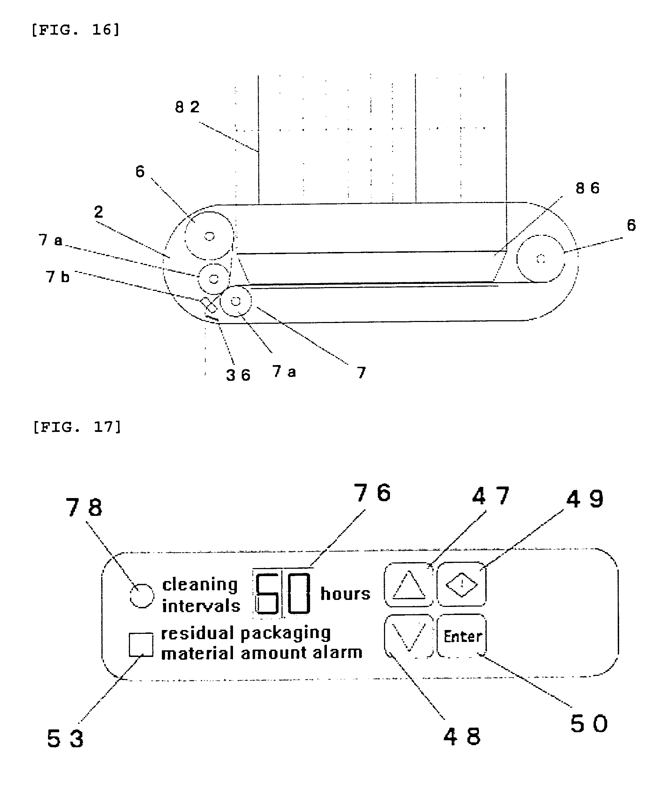

The cage 82 is suspended from a hanger 85, which extends from a support column 84. Bird excrement is packaged in a sealed packaging material 6 and is discharged from the lower part of a set container 2. The packaging material 6 is set in the set container 2 as shown in the side view of FIG. 16, with a rectangular seal guide 86 placed on the packaging material 6 (in the case of the toilet for cages, the material 6 has combined use as a packaging material and a collecting material). Furthermore, the sealed part 6c of the packaging material 6 is protected from being contaminated with excrement.

Due to the above-mentioned construction, the pet excrement collecting device specifically for caged birds according to the third embodiment of the present invention is operated such that, when a bird in the cage excretes, bird excrement is collected on the surface of the packaging material 6 set in the set container 2.

In the set container 2, both a packaging part 7 and the rolled packaging material 6 are installed at respective designated positions. The packaging part 7 includes two heat rollers 7a and two sealing bars 7b to seal the packaging material 6 along a width direction thereof. A cutter 36 is provided at a position around the sealing bars 7b such that, after the packaging material 6 has been fed and sealed by the sealing bars 7b, the cutter 36 is moved to a central position on the sealed part of the packaging material and waits at the position. The position at which the cutter 36 waits is a set position in the set container 2.

In the set container 2, a power cord (not shown) is provided along the support column 84. The basic construction of the packaging part provided in the excrement collecting device specifically for caged birds remains similar to that of the above-mentioned dog toilet, and further explanation is thus not deemed necessary.

In the above description, the third embodiment provides an excrement collecting device specifically for caged birds. However, if a metal mesh is installed above the packaging material 6 (for example, the metal mesh may be horizontally secured to the rectangular seal guide 86), the excrement collecting device may be used to collect the excrement of caged small mammals, such as hamsters, rabbits, or hedgehogs. In the above case, the excrement collecting device specifically for caged small mammals can package excrement in sealed packaging material and discard the packaged excrement. If some small mammals, which urinate, are raised in cages, the urine may be cleaned using the above-mentioned roll-type collecting material specifically for dogs. In the above case, from the view of a hygienic effect, it is preferred to place a metal mesh above the packaging material 6.

FIG. 17 shows a control panel for the excrement collecting device specifically for caged birds.

In the control panel, a packaging start time setting counter 76 is provided to set the time to start the operation of packaging the caged bird excrement, such that the packaging frequency is set within a range from a minimum interval of 10 hours to a maximum interval of 99 hours.

The control panel further includes several control keys which are an increment key 47, a decrement key 48, and an order change key 49, so that the owner can manipulate the control keys to set the excrement packaging frequency and, thereafter, confirms and registers the set value by manipulating the enter key 50. Furthermore, both a remaining packaging material amount alarm lamp 53 and a packaging frequency setting lamp 78 are provided in the control panel. If the amount of remaining packaging material (which has a combined use as an excrement collecting material) is reduced below a predetermined reference amount, the remaining packaging material amount alarm lamp 53 flashes to inform the owner of the reduction.

At the initial stage, the packaging start time setting counter 76 was set to the minimum 10 hours, to clean the excrement at intervals of 10 hours. When the enter key 50 is continuously manipulated for three seconds, the packaging frequency setting lamp 78 is turned on, and the packaging start time setting counter 76 flashes.

When the order change key 49 is first manipulated, the ones digit part of the packaging start time setting counter 76 flashes so that the ones digit may be set and, thereafter, when the key 49 is manipulated once more, the flashing is transferred from the ones digit part to the tens digit part.

At the initial stage, the packaging frequency has been set to 10 hours, so that it is desired to set the packaging frequency to 50 hours to clean the excrement every time 50 hours have passed. To change the set value to 50 hours, the increment key 47 is manipulated four times to cause the tens digit "5" to flash. If the increment key 47 is excessively manipulated to exceed the desired value for the tens digit, the decrement key 48 is manipulated to reduce the value of the tens digit. When the desired packaging frequency has been completely set, the enter key 50 is manipulated to confirm the set value and, at the same time, the packaging frequency setting lamp 78 is turned off, while the packaging start time setting counter 76 is turned on to show the set value. The packaging start time setting counter 76 is turned off after 20 seconds have passed. To confirm the set value, the enter key 50 is manipulated so that the packaging start time setting counter 76 shows the set hours and is turned off after 20 seconds have passed.

The core, around which the packaging material 6 is wound, is provided with an ID tag (identification tag) having the winding amount data. Furthermore, an encoder is provided on the heat rollers 7a of the packaging part 7 to calculate the fed amount of the packaging material 6 and measures the remaining amount of packaging material. If the encoder determines that the packaging material has been consumed and only ten sets of packaging material are left in the container, the remaining packaging material amount alarm lamp 53 is turned on. In the above state, the remaining amount of packaging material can be easily determined as follows. The amount of packaging material to be used for every packaging operation is a fixed quantity. Thus, if the amount of packaging material consumed in one operation is subtracted from the winding amount data recorded in the ID tag, the time that the remaining packaging material has completely consumed can be easily calculated using the counter 76 or the set hours. Because the ID tag is readable and writable, the consumed amount of the packaging material may be written on the tag. Alternately, the data stored in the memory may be renewed.

### Fourth Embodiment

### (Detection of winding amount and data management)

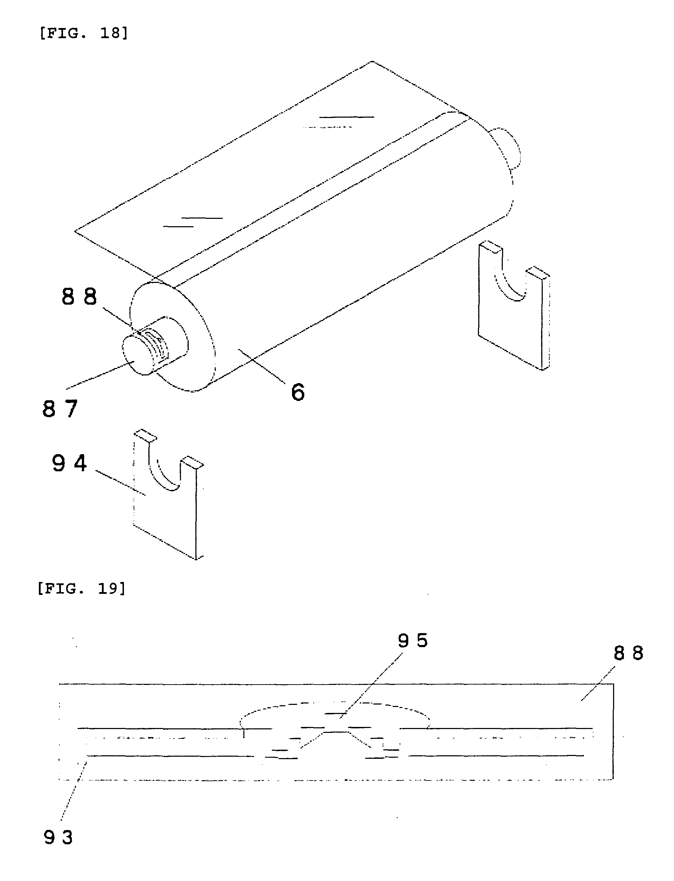

As shown in FIG. 18, the packaging material 6 is wound around the core 87 in a roll shape. The core 87 is provided on the outer surface thereof with a film-type transponder 88, as shown in FIG. 19. The transponder 88 includes an antenna 93 and a semiconductor chip 95 between two sheets, and reads data from data memory and outputs a signal indicative of the data through the antenna 93.

To a control circuit 69 is connected a data communication RW unit 90, which can frequently read or write data indicating the packaging material winding amount from or to the transponder 88 of the core 87.

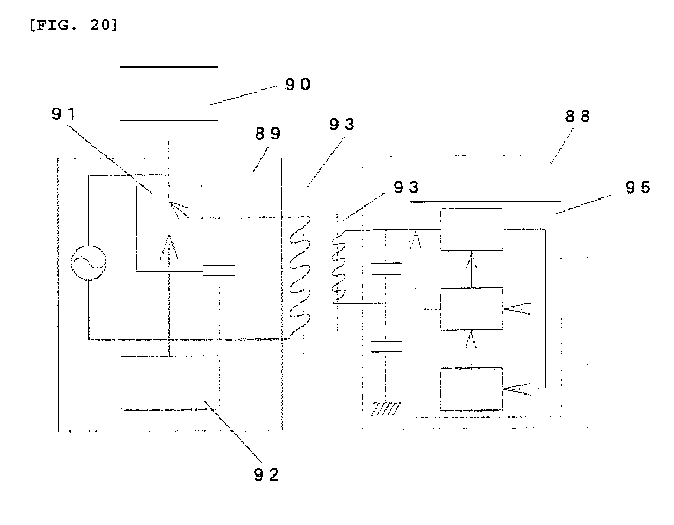

As shown in FIG. 20, the RW unit 90 includes an RF module 91 and a control module 92. The control module 92 has a transmission/receiving decoding circuit. To write data, a transmission signal is primarily produced from data, which has been output from the control circuit 69 and indicates the amount of remaining packaging material around the core (this amount will be described later herein), according to a predetermined data writing communication order designated between the control circuit 89 and the transponder 88. Thereafter, the RF module 91 outputs the transmission signal through the antenna 93 after converting the transmission signal into a transmission radio wave signal by modulating the frequency of the transmission signal into a predetermined frequency, such as an FSK signal frequency. Thus, the amount of remaining packaging material around the core is written in the memory of the transponder 88. To read data, a signal, which has been transmitted from the transponder 88 and received by the antenna 93, is demodulated by the RF module and, thereafter, the demodulated signal is converted into a digital signal by the control module 92, thus reading data indicating the amount of packaging material remaining around the core, and output from the memory of the transponder 88.

When the core 87 of the packaging material 6 is installed in a bearing 94, the RW unit 90 reads the data indicating the amount of packaging material remaining around the core from the transponder 88 as follows.

First, the RF module 91 outputs a transmission command signal to the transponder 88 and provides electrostatic responding energy to the transponder 88. Thus, upon receiving the transmission command signal, the transponder 88 starts its operation using the electrostatic energy and executes the transmission of a signal indicative of the winding amount data stored in the memory. Therefore, the mode of the RF module 91 is converted from the signal transmission mode to a signal receiving mode and receives the signal which has been output from the transponder 88. Upon receiving the signal, the RF module 91 reads the signal indicative of the winding amount data, converts (encodes) the data signal into a digital signal, and transmits the signal to the control circuit 69.

As described above, the packaging material winding amount data can be used to predict the time that the packaging material will be completely consumed after the packaging frequency setting. The amount of packaging material to be used in every packaging is a fixed quantity so that, if it is possible to determine information about how many centimeters of packaging material are consumed every 10 hours, the time for complete consumption of packaging material can be easily calculated by subtracting the amount of packaging material consumed in one operation from the winding amount data, or by counting the number of pulses of the encoder, which cooperates with the heat rollers 7a, and calculating the amount of consumed packaging material.

In this embodiment, winding amount data is stored in the memory. However, in the case of a dog toilet, the intervals between or amount of roll-type collecting material may be stored in the memory.

In the case of a caged bird toilet, the amount of packaging material to be consumed every packaging operation is fixed according to the size or style of the set container 2, so that data indicating packaging material consumption operations may be stored in the memory.

In the case of a litter box which is a toilet specifically for cats, the amount of packaging material to be consumed every packaging operation may vary according to whether an operation of packaging excrement or of packaging litter is conducted. In the above case, data indicating the length of the consumed part of the packaging material may be stored in the memory. When the amount of excrement to be collected after every excretion has been set to 1 and, at the same time, the amount of packaging material to be consumed to package old litter has been set to 5, the following operation will be executed.

If the winding amount data stored in the memory was 100 and ninety five percent of the originally installed packaging material has been consumed, the amount of remaining packaging material is recognized as capacity to package excrement five times or to package old litter once. That is, the amount of remaining packaging material in this state can effectively respond to any packaging operation.

In the above state, old litter will need to be changed with fresh litter in the near future. Thus, if the owner determines that the change of old litter will be executed after excrement packaging has been executed twice, the excrement packaging operation will be prevented when an amount of packaging material capable of packaging excrement three times remains.

This is because the remaining packaging material 6 must be reserved to package old litter.

In the above state, if excrement packaging occurs prior to the cycle of changing old litter, all of the remaining packaging material may be used to package excrement three times and, thereafter, new packaging material 6 is installed. After installing the new packaging material 6, the device may automatically determine that old litter must be replaced with fresh litter, therefore the device executes the replacement of old litter with fresh litter. When the packaging material has been completely consumed, the remaining packaging material may be prevented from being unnecessarily wasted by advancing or delaying the time to change the old litter with fresh litter.

Furthermore, the data to be recorded in the transponder 88 is simple numerical, data, so that a cheap transponder, which has a small memory capacity and a price of five Yen per item, may be usable.

As described above, the remaining packaging material in the device of this invention can be controlled before complete consumption thereof so that the packaging material may be completely consumed for its intended purposes without wasting it and the timing of complete consumption thereof may be efficiently managed.

### [Industrial Applicability]

The present invention moves pet excrement, such as dung or urine, on a pet toilet, to a packaging part, where the source of odors is completely packaged and sealed, so that the invention keeps the pet toilet clean, prevents odors from diffusing into a room, and sets an owner free from the unpleasant work of removing pet excrement.

## Claims

1. An automatic cleaning and packaging device for pet excrement used in a pet toilet, which is installed to encourage a pet to excrete and to remove the pet excrement after leaving the pet excrement in the device for a predetermined lengthy period, the automatic cleaning and packaging device comprising:
a collecting material to collect the pet excrement; a set container to set therein the collecting material; means for moving the collecting material, collected together with the pet excrement from the set container, to a packaging part; and means for packaging the pet excrement and the collecting material, moved by the moving means, using a packaging material.

2. The automatic cleaning and packaging device for pet excrement according to claim 1, wherein the pet is a cat and the collecting material is a granule-shaped material having high polymers, so that the pet excrement becomes hardened by the high polymers of the collecting material and is fed to the packaging part to package the pet excrement.

3. The automatic cleaning and packaging device for pet excrement according to claim 1, wherein the pet is a dog and the collecting material is an absorbent sheet-shaped material, so that, when the pet excretes on the sheet-shaped material, the sheet-shaped material is fed to the packaging part to package the pet excrement.

4. The automatic cleaning and packaging device for pet excrement according to any one of claims 1 through 3, wherein the set container is provided with means for detecting the presence of a pet in the set container or on the collecting material, so that, when no pet is present either in the set container or on the collecting material, the detecting means operates the moving means to move the collecting material, collected together with the excrement, to the packaging part.

5. The automatic cleaning and packaging device for pet excrement according to any one of claims 1 through 4, wherein the set container is provided with means for detecting whether a pet is present in the set container or on the collecting material, a fence surrounding the set container to selectively prevent the pet from reaching the set container, an inlet opening defined in the fence to allow the pet to enter the set container, and an openable automatic door provided in the inlet opening, wherein, after appropriately predicting the time that no pet is present in the set container, the inlet opening is closed during the operation of moving the collecting material to the packaging part.

6. The automatic cleaning and packaging device for pet excrement according to any one of claims 1 through 5, wherein the collecting material comprises a material having high polymers, and the set container comprises: means for setting estimated time, required by the high polymers which absorb the pet excrement to appropriately harden the pet excrement; means for counting time; and means for detecting whether a pet is present in the set container or on the collecting material, wherein, when the detecting means detects that a pet is present in the set container or on the collecting material, the time counting means starts counting time, and when the detecting means detects that no pet is present either in the set container or on the collecting member after the preset time, required by the high polymers which absorb the pet excrement to appropriately harden the pet excrement, has passed, the moving means for moving the collecting material, collected together with the pet excrement from the set container, to the packaging part is operated.

7. The automatic cleaning and packaging device for pet excrement according to any one of claims 1 through 6, which is used in a pet toilet, and is installed to encourage a pet to excrete and to remove the pet excrement after leaving the pet excrement in the device for a predetermined lengthy period, the automatic cleaning and packaging device comprising:
a collecting material to collect the pet excrement; and a set container to set therein the collecting material, the set container comprising: means for detecting whether a pet is present in the set container or on the collecting material, and means for spraying deodorant, wherein, when the detecting means detects that no pet is present either in the set container or on the collecting material after the pet has excreted on the collecting material in the set container, the spraying means is operated to spray the deodorant.

8. An automatic cleaning and packaging device for pet excrement used in a pet toilet, which is installed to encourage a pet to excrete and to remove the pet excrement after leaving the pet excrement in the device for a predetermined lengthy period, the automatic cleaning and packaging device comprising:
a collecting material to collect the pet excrement; a set container to set therein the collecting material; and odor suction means for drawing odorous air contaminated with odors generated from the pet excrement in the set container, wherein the odorous air drawn by the odor suction means is filtered using deodorizing means prior to being discharged into a room.

9. An automatic cleaning and packaging device for pet excrement used in a pet toilet, which is installed to encourage a pet to excrete and to remove the pet excrement after leaving the pet excrement in the device for a predetermined lengthy period, the automatic cleaning and packaging device comprising:
a collecting material to collect the pet excrement, the collecting material comprising a granule-shaped material specifically for cats and having high polymers; and a set container to set therein the collecting material, wherein, when the collecting material in the set container becomes old, the old collecting material is removed from the set container and is moved to a packaging part while an appropriate amount of fresh collecting material is supplied to and set in the set container.

10. An automatic cleaning and packaging device for pet excrement used in a pet toilet, which is installed to encourage a pet to excrete and to remove the pet excrement after leaving the pet excrement in the device for a predetermined lengthy period, the automatic cleaning and packaging device comprising:
a sheet-shaped collecting material to collect the pet excrement; and a set container to set therein the collecting material, wherein, after an existing piece of sheet-shaped collecting material has been removed from the set container, a fresh piece of sheet-shaped collecting material is supplied to and set in the set container.

11. The automatic cleaning and packaging device for pet excrement according to any one of claims 1 through 6, wherein at least part of the packaging material is made of a transparent material, thus allowing an owner of the pet to check the condition of the pet's health by viewing the packaged excrement.

12. A collecting material for pet excrement, which is specifically used for dogs, and comprises: an absorbent sheet-shaped material attached to a packaging material at regular intervals and shaped into a roll shape; and a sensor installed in a set container to set the collecting material therein, wherein the detecting means checks for a gap between pieces of the absorbent sheet-shaped material and creates a seal by stopping the gap between the pieces of absorbent sheet-shaped material.

13. A collecting material for excrement of a pet raised in a basket, which is used as a packaging material to directly collect and package the excrement, has a thermally sealable surface, and is set in a roll-type shape, wherein the collecting material comprises:
an ID tag, to or from which data indicating a winding amount of the roll-type collecting material can be stored or erased; a signal transmission/receiving unit to transceive a signal to or from the ID tag; and means for detecting a fed amount of the set collecting material, based on the data indicating the winding amount of the roll-type collecting material stored in the ID tag, wherein data indicating an area of the collecting material which is not in direct contact with the pet excrement has been stored in a memory part; the data indicating the area is read from the memory part while the collecting material is fed to a packaging part; and, when the detecting means detects that a thermal sealing part has reached the area, movement of the thermal sealing part is stopped and the excrement is packaged at a place offset from the excrement collecting place.

14. The collecting material for pet excrement according to claim 13, wherein, when it is detected, based on the data indicating the winding amount stored in the ID tag, that the amount of remaining collecting material is reduced below a predetermined reference amount, the reduction in the remaining amount is made known through an alarm; and, when it is determined that the amount of the remaining collecting material cannot reach the area which is not in direct contact with the pet excrement, the remaining collecting material is not fed even if it is required to feed the collecting material.

15. A packaging material for pet excrement specifically for cats, which is used with an excrement collecting material being a granule-shaped material having high polymers, is used to package the excrement, has a thermally sealable surface, and is set in a roll-type shape, wherein the packaging material comprises:
an ID tag provided on the packaging material, in or from which data indicating a winding amount of the roll-type packaging material can be stored or erased; a signal transmission/receiving unit to transceive a signal to or from the ID tag; and means for detecting a fed amount of the set packaging material, based on the data indicating the winding amount of the roll-type packaging material stored in the ID tag, wherein data indicating a standard length of a consumed part of the packaging material and data indicating a fed amount of the packaging material required to be fed at the time of changing the granule-shaped collecting material having high polymers have been stored in a memory part; when it is detected, based on the data indicating the winding amount stored in the ID tag, that the amount of the remaining packaging material is reduced below a predetermined reference amount, the reduction in the remaining amount is made known through an alarm; and, when it is determined that the amount of the remaining packaging material cannot reach an area which is not in direct contact with the pet excrement, the remaining packaging material is not fed even if it is required to feed the packaging material.
